# EUROPEAN PATENT APPLICATION

(11) **EP 4 106 284 A1**
(43) Date of publication of application: **21.12.2022**
(21) Application number: 20927878.7
(22) Date of filing: 17.12.2020
(51) Int. Cl.: H04L 12/873, H04L 12/877, H04L 12/865

(54) **SERVICE FLOW TRANSMISSION METHOD AND DEVICE BASED ON FLEXE**

(30) Priority: 26.03.2020 CN 202010225075
(71) Applicant: Huawei Technologies Co., Ltd., Shenzhen, Guangdong 518129, (CN)
(72) Inventor: ZHANG, Jian, Shenzhen, Guangdong 518129 (CN); HAN, Tao, Shenzhen, Guangdong 518129 (CN); ZHAO, Wei, Shenzhen, Guangdong 518129 (CN)
(74) Representative: Thun, Clemens
(86) International application number: PCT/CN2020/137333
(87) International publication number: WO 2021/189994

(57) **Abstract**

This application provides a FlexE-based service flow transmission method and a device, and belongs to the field of communication technologies. This application provides a method for efficiently allocating a slot in FlexE. A network device automatically allocates a slot on a PHY link to a service flow based on a slot allocation policy and a required bandwidth of the service flow, and transmits the service flow by using the allocated slot. Because a user does not need to manually specify a corresponding slot for the service flow, learning costs caused by perception of the user for how to arrange slots are avoided, and a complex operation of configuring the slot for the service flow by the user is avoided. Therefore, configuration complexity is greatly reduced, and slot allocation efficiency is improved.

## Description

This application claims priority to Chinese Patent Application No. 202010225075.5, filed on March 26, 2020 and entitled "FLEXE-BASED SERVICE FLOW TRANSMISSION METHOD AND DEVICE", which is incorporated herein by reference in its entirety.

### TECHNICAL FIELD

This application relates to the field of communication technologies, and in particular, to a FlexE-based service flow transmission method and a device.

### BACKGROUND

Flexible Ethernet (Flexible Ethernet, FlexEth or FlexE) is a more advanced Ethernet technology developed based on conventional Ethernet. FlexE mainly provides three functions: bonding, channelization, and sub-rating. Bonding means that a plurality of PHYs are bonded into a FlexE group, and a plurality of PHYs in a same FlexE group can jointly transmit a service flow (client), to support a higher rate.

For example, a transmission direction of a FlexE service flow is from a network device A to a network device B. A user needs to manually perform a configuration operation on the network device A to configure a physical interface number (a PHY number) of a PHY for transmitting the service flow, and further configure a slot number of a slot occupied by the service flow on the PHY. The network device A obtains a slot configuration table based on the configuration operation of the user, includes the slot configuration table in a FlexE overhead frame, and sends the FlexE overhead frame to the network device B. The network device B extracts the slot configuration table from the FlexE overhead frame, and parses the slot configuration table to obtain the physical interface number and the slot number. The network device B finds the corresponding PHY based on the physical interface number, finds the corresponding slot based on the slot number, and reestablishes the service flow in the corresponding slot of the corresponding PHY.

When the foregoing method is used, the user needs to manually specify, by performing a configuration operation, a specific slot that is to be allocated to a specific service flow. The configuration operation is very complex, resulting in high time and labor consumption and low efficiency.

### SUMMARY

Embodiments of this application provide a FlexE-based service flow transmission method and a device, to improve slot allocation efficiency in FlexE. Technical solutions are as follows.

According to a first aspect, a FlexE-based service flow transmission method is provided. The method includes: A first network device obtains a slot allocation policy, where the slot allocation policy is for allocating a slot based on a required bandwidth of a first service flow. The first network device determines a first slot based on the slot allocation policy and the required bandwidth, where the first slot is a slot of a physical layer PHY link between the first network device and a second network device. The first network device sends the first service flow to the second network device based on the first slot.

The foregoing provides a method for efficiently allocating a slot in FlexE. The network device automatically allocates the slot on the PHY link to the service flow based on the slot allocation policy and the required bandwidth of the service flow, and transmits the service flow by using the allocated slot. Because a user does not need to manually specify a corresponding slot for the service flow, learning costs caused by perception of the user for how to arrange slots are avoided, and a complex operation of configuring the slot for the service flow by the user is avoided. Therefore, configuration complexity is greatly reduced, and slot allocation efficiency is improved.

Optionally, that the first network device determines a first slot based on the slot allocation policy and the required bandwidth includes: If an idle slot meets the required bandwidth, the first network device determines, in the idle slot based on the slot allocation policy and the required bandwidth, the first slot that meets the required bandwidth.

In this optional manner, the slot that meets the required bandwidth is automatically determined by using the slot allocation policy, and the slot that meets the required bandwidth is allocated to the service flow. Therefore, in a process of transmitting the service flow, the service flow is transmitted by using the slot that meets the required bandwidth, so that a bandwidth of the service flow is ensured. Because the bandwidth of the service flow is ensured, a requirement for ensuring an SLA of a service is met. Especially, when the required bandwidth is specified by the user, slot allocation performed in this optional manner enables the bandwidth of the service flow to meet an expectation of the user for the bandwidth.

Optionally, that the first network device determines a first slot based on the slot allocation policy and the required bandwidth includes: If an idle slot does not meet the required bandwidth, the first network device determines, in the idle slot based on the slot allocation policy and an active bandwidth, the first slot that meets the active bandwidth, where the active bandwidth is less than the required bandwidth, and the active bandwidth is a minimum required bandwidth on which the first network device can start transmission of the first service flow.

In this optional manner, when idle slots are insufficient, the network device may fail to find an idle slot that meets the required bandwidth. However, the slot that meets the active bandwidth is automatically determined by using the slot allocation policy, and the slot that meets the active bandwidth is allocated to the service flow. Therefore, even if the idle slots are insufficient, the network device can start the transmission of the service flow by using the slot corresponding to the active bandwidth. In this way, connectivity of the service flow is ensured, the service flow can be transmitted, and disconnection of the service flow is avoided, so that transmission of as many service flows as possible can be started.

Optionally, that the first network device determines a first slot based on the slot allocation policy and the required bandwidth includes: If an idle slot does not meet the required bandwidth, the first network device determines, based on the slot allocation policy and a priority of the first service flow, the first slot in a slot occupied by a second service flow, where a priority of the second service flow is lower than the priority of the first service flow.

In this optional manner, when idle slots are insufficient, a resource contention relationship exists between different service flows, and a resource contended by the service flows is the idle slot. A slot originally occupied by a low-priority service flow is automatically allocated to a high-priority service flow by using the slot allocation policy. Therefore, even if the idle slots are insufficient, the high-priority service flow can preempt the slot of the low-priority service flow, and the high-priority service flow may be transmitted by using the slot originally occupied by the low-priority service flow, so that a bandwidth of the high-priority service flow is ensured or connectivity of the high-priority service flow is ensured.

Optionally, that the first network device determines a first slot based on the slot allocation policy and the required bandwidth includes: The first network device determines, based on the slot allocation policy, a first PHY link with a smallest physical interface number in an available PHY link of a FlexE group. The first network device determines, based on the required bandwidth, the first slot with a smallest slot number in an idle slot of the first PHY link.

In this optional manner, the slot with the smallest slot number on the available PHY link currently with the smallest physical interface number is automatically determined by using the slot allocation policy, so that a simple automatic slot allocation manner is provided, to facilitate management of an idle slot of the FlexE group.

Optionally, that the first network device determines, in the idle slot based on the slot allocation policy, the first slot that meets the required bandwidth includes: The first network device determines, based on the slot allocation policy, a second PHY link with smallest load in an available PHY link of a FlexE group. The first network device determines, based on the required bandwidth, the first slot with a smallest slot number in an idle slot of the second PHY link.

In this optional manner, because load sharing is implemented based on PHY links, when a PHY link is faulty, a service flow transmitted on a PHY link other than the faulty PHY link is not affected, and can be normally transmitted. Therefore, a case in which all service flows are interrupted because a PHY link is faulty is avoided. For example, if the FlexE group includes two PHY links: a PHY 1 and a PHY 2, and 2N service flows need to be transmitted, in this optional manner, N service flows are transmitted on the PHY 1, and the other N service flows are transmitted on the PHY 2. In this case, even if the PHY 1 is faulty and a dynamic slot migration function corresponding to S309 is not performed, the N service flows on the PHY 2 can be normally transmitted, so that 50% of the service flows can still be quickly recovered without manual intervention. In addition, when load of the PHY link is not considered, all the service flows may be centrally distributed on one or more PHY links. As a result, some PHY links are full-loaded, and some PHY links are empty-loaded. However, in this optional manner, all the service flows can be evenly shared by different PHY links, so that pressure of a single PHY link is reduced, and a load sharing function is implemented.

Optionally, that the first network device determines a first slot based on the slot allocation policy and the required bandwidth includes: The first network device determines the first slot in idle slots of a plurality of PHY links based on the slot allocation policy and the required bandwidth, where the first slot is evenly distributed on different PHY links in the plurality of PHY links.

In this optional manner, a required bandwidth of a same service flow is evenly shared by as many available PHY links as possible. In an aspect, impact on the service flow that is caused by a fault of a single PHY link can be greatly reduced. Even if a slot migration step is not performed, because the service flow can be transmitted by using a slot on another PHY link, an available bandwidth of the service flow is ensured, and transmission is not interrupted. For example, in this optional manner, the required bandwidth of the first service flow may be evenly shared by N PHY links, and each PHY link occupies a slot corresponding to 1/N of the required bandwidth. In this case, even if a PHY link in the N PHY links is faulty, the remaining (N-1) PHY links are still used to transmit the first service flow, so that it is ensured that (N-1)/N of the required bandwidth are available for the first service flow, and therefore quick fault recovery can be implemented without manual intervention. In another aspect, pressure of a single PHY link is reduced, and a load sharing function is implemented.

Optionally, after that the first network device determines a first slot based on the slot allocation policy and the required bandwidth, the method further includes: When the PHY link on which the first slot is located is faulty, the first network device determines a second slot based on the slot allocation policy and the required bandwidth of the first service flow, where the second slot is different from the first slot. The first network device sends the first service flow to the second network device based on the second slot.

In this optional manner, when the PHY link on which the first service flow is located is faulty, the first network device can dynamically migrate, based on the slot allocation policy, the first service flow from an original slot to a redetermined slot, to redeploy the slot for the first service flow, so that slot rearrangement is implemented. In addition, the slot is redetermined based on the slot allocation policy. Because a transmit end and a receive end do not need to perform a negotiation procedure, a delay caused by the negotiation procedure is avoided, traffic interruption time can be controlled within 50 milliseconds, and it is ensured that the service flow is quickly recovered within 50 milliseconds. Therefore, a fault recovery speed of the service is greatly improved. In another aspect, after the PHY link is faulty, the receive end and the transmit end redetermine slots based on the same slot allocation policy and the same required bandwidth. Therefore, the new slots determined by the receive end and the transmit end are the same, so that slot arrangements of the receive end and the transmit end are consistent after slot migration. In this case, the receive end and the transmit end can normally transmit the service flow based on the consistent slot arrangements, so that a protection switching function is implemented between different PHY links in the FlexE group, the service flow on the faulty PHY link is switched to a normal PHY link, and transmission interruption of the service flow is avoided.

Optionally, after that a first network device obtains a slot allocation policy, the method further includes: The first network device pushes the slot allocation policy to the second network device.

The slot allocation policy is pushed. In an aspect, policy consistency between the RX end and the TX end is ensured. Therefore, it is ensured that in various slot migration scenarios such as a PHY link fault, PHY link addition or deletion, and required bandwidth update, because the RX end and the TX end use the consistent slot allocation policy, slots redeployed by the RX end and the TX end are consistent, and this is conducive to quick traffic recovery. In another aspect, a procedure in which the user configures the slot allocation policy for the RX end is avoided, so that the configuration complexity is reduced, and efficiency of deploying the slot allocation policy is improved.

Optionally, that the first network device determines a second slot based on the slot allocation policy and the required bandwidth of the first service flow includes: If an idle slot meets the required bandwidth, the first network device determines, in the idle slot based on the slot allocation policy and the required bandwidth, the second slot that meets the required bandwidth.

This optional manner is performed when the PHY link is faulty. The slot that meets the required bandwidth is redetermined, and the service flow is transmitted by using the redetermined slot. Therefore, after the service flow is migrated from the original slot to the redetermined slot, the bandwidth of the service flow can still meet the required bandwidth, so that normal working of as many service flows as possible is ensured. Because the bandwidth of the service flow continues to be ensured after the PHY link is faulty, the service-level agreement (Service-Level Agreement, SLA) of the service is ensured. Especially, when the required bandwidth is specified by the user, slot reallocation performed in this optional manner enables the bandwidth of the service flow to meet the expectation of the user for the bandwidth after the PHY is faulty.

Optionally, that the first network device determines a second slot based on the slot allocation policy and the required bandwidth of the first service flow includes: If an idle slot does not meet the required bandwidth, the first network device determines, in the idle slot based on the slot allocation policy and the active bandwidth, the second slot that meets the active bandwidth, where the active bandwidth is less than the required bandwidth, and the active bandwidth is the minimum required bandwidth on which the first network device can start the transmission of the first service flow.

This optional manner is performed when the PHY link is faulty. When the PHY link is faulty and idle slots are insufficient, the slot that meets the active bandwidth is redetermined, and the service flow is transmitted by using the determined slot. Therefore, the service flow can be in a connected state, the service flow can be transmitted to the peer end, and traffic interruption of the service flow after the PHY link is faulty is avoided, so that transmission of as many service flows as possible can still be started after the PHY link is faulty.

Optionally, that the first network device determines a second slot based on the slot allocation policy and the required bandwidth of the first service flow includes: If an idle slot does not meet the required bandwidth, the first network device determines, based on the slot allocation policy and the priority of the first service flow, the second slot in a slot occupied by the second service flow, where the priority of the second service flow is lower than the priority of the first service flow.

This optional manner is performed when the PHY link is faulty. When the PHY link is faulty and idle slots are insufficient, slot reallocation is performed based on the priority of the service flow, and a slot originally occupied by a low-priority service flow is reallocated to a high-priority service flow. Therefore, the high-priority service flow has an opportunity to preferentially occupy the slot through contention, and the high-priority service flow can be transmitted by using the slot originally occupied by the low-priority service flow, so that disconnection of the high-priority service flow is avoided, and quick recovery of the high-priority service flow is ensured.

Optionally, that the first network device determines a second slot based on the slot allocation policy and the required bandwidth of the first service flow includes: The first network device determines, based on the slot allocation policy, a first PHY link with a smallest physical interface number in an available PHY link of the FlexE group. The first network device determines, based on the required bandwidth, the second slot with a smallest slot number in an idle slot of the first PHY link.

Optionally, that the first network device determines a second slot based on the slot allocation policy and the required bandwidth of the first service flow includes: The first network device determines, based on the slot allocation policy, a second PHY link with smallest load in an available PHY link of the FlexE group. The first network device determines, based on the required bandwidth, the second slot with a smallest slot number in an idle slot of the second PHY link.

Optionally, that the first network device determines a second slot based on the slot allocation policy and the required bandwidth of the first service flow includes: The first network device determines the second slot in idle slots of a plurality of PHY links based on the slot allocation policy and the required bandwidth, where the second slot is evenly distributed on different PHY links in the plurality of PHY links.

Optionally, after that the first network device determines a first slot based on the slot allocation policy and the required bandwidth, the method further includes: When the required bandwidth of the first service flow is updated, the first network device determines a third slot based on the slot allocation policy and an updated required bandwidth of the first service flow, where the third slot is different from the first slot. The first network device sends the first service flow to the second network device based on the third slot.

In a scenario in which the required bandwidth of the service flow is updated, the slot is reallocated by using the slot allocation policy. Because the receive end and the transmit end use the consistent slot allocation policy and the consistent updated required bandwidth, the receive end and the transmit end can automatically reallocate the consistent slot. Therefore, communication overheads caused by negotiation for slot configuration are avoided, and lossless update of the required bandwidth is implemented.

Optionally, after that the first network device determines a first slot based on the slot allocation policy and the required bandwidth, the method further includes: When a PHY link is added to the FlexE group in which the first slot is located, the first network device determines, based on the slot allocation policy and the required bandwidth of the first service flow, a fourth slot in slots of a FlexE group obtained after the PHY link is added, where the fourth slot is different from the first slot. The first network device sends the first service flow to the second network device based on the fourth slot. When a PHY link is deleted from the FlexE group in which the first slot is located, the first network device determines, based on the slot allocation policy and the required bandwidth of the first service flow, a fifth slot in a slot of a FlexE group obtained after the PHY link is deleted, where the fifth slot is different from the first slot. The first network device sends the first service flow to the second network device based on the fifth slot.

When the PHY link is added to or deleted from the FlexE group, the slot is reallocated by using the slot allocation policy. Because the receive end and the transmit end use the consistent slot allocation policy and the consistent FlexE group obtained after the PHY link is added or deleted, the receive end and the transmit end can automatically reallocate the consistent slot. Therefore, communication overheads caused by negotiation for slot configuration are avoided, and lossless addition or deletion of the PHY link is implemented.

Optionally, after that the first network device determines a first slot based on the slot allocation policy and the required bandwidth, the method further includes: When a to-be-transmitted third service flow is added or an originally transmitted fourth service flow is deleted, the first network device determines a sixth slot based on the slot allocation policy and the required bandwidth of the first service flow, where the sixth slot is different from the first slot. The first network device sends the first service flow to the second network device based on the sixth slot.

In a scenario in which the service flow is added or deleted, the slot is reallocated by using the slot allocation policy. Because the receive end and the transmit end use the consistent slot allocation policy, the receive end and the transmit end can automatically reallocate the consistent slot. Therefore, communication overheads caused by negotiation for slot configuration are avoided, and lossless addition or deletion of the service flow is implemented.

Optionally, that the first network device determines a second slot based on the slot allocation policy and the required bandwidth of the first service flow includes: The first network device deletes, from a first FlexE group, the PHY link in which the first slot is located, to obtain a second FlexE group, where the second FlexE group does not include the PHY link in which the first slot is located. The first network device determines the second slot in the second FlexE group based on the slot allocation policy and the required bandwidth of the first service flow.

In this optional manner, after the PHY link is faulty, a procedure of deleting the faulty PHY link from the FlexE group is quickly started, so that the faulty PHY link is automatically removed from the FlexE group, and a remaining PHY link in the FlexE group is in an active state. Therefore, it is ensured that the FlexE group is available, and a case in which the entire FlexE group is unavailable after the PHY link is faulty is avoided.

According to a second aspect, a FlexE-based service flow transmission method is provided. The method includes: A second network device obtains a slot allocation policy, where the slot allocation policy is for allocating a slot based on a required bandwidth of a first service flow. The second network device determines a first slot based on the slot allocation policy and the required bandwidth, where the first slot is a slot of a physical layer PHY link between the second network device and a first network device. The second network device receives the first service flow from the first network device based on the first slot.

Optionally, that the second network device determines a first slot based on the slot allocation policy and the required bandwidth includes: If an idle slot meets the required bandwidth, the second network device determines, in the idle slot based on the slot allocation policy and the required bandwidth, the first slot that meets the required bandwidth.

Optionally, that the second network device determines a first slot based on the slot allocation policy and the required bandwidth includes: If an idle slot does not meet the required bandwidth, the second network device determines, in the idle slot based on the slot allocation policy and an active bandwidth, the first slot that meets the active bandwidth, where the active bandwidth is less than the required bandwidth, and the active bandwidth is a minimum required bandwidth on which the second network device can start transmission of the first service flow.

Optionally, that the second network device determines a first slot based on the slot allocation policy and the required bandwidth includes: If an idle slot does not meet the required bandwidth, the second network device determines, based on the slot allocation policy and a priority of the first service flow, the first slot in a slot occupied by a second service flow, where a priority of the second service flow is lower than the priority of the first service flow.

Optionally, that the second network device determines a first slot based on the slot allocation policy and the required bandwidth includes: The second network device determines, based on the slot allocation policy, a first PHY link with a smallest physical interface number in an available PHY link of a FlexE group. The second network device determines, based on the required bandwidth, the first slot with a smallest slot number in an idle slot of the first PHY link.

Optionally, that the second network device determines, in the idle slot based on the slot allocation policy, the first slot that meets the required bandwidth includes: The second network device determines, based on the slot allocation policy, a second PHY link with smallest load in an available PHY link of a FlexE group. The second network device determines, based on the required bandwidth, the first slot with a smallest slot number in an idle slot of the second PHY link.

Optionally, that the second network device determines a first slot based on the slot allocation policy and the required bandwidth includes: The second network device determines the first slot in idle slots of a plurality of PHY links based on the slot allocation policy and the required bandwidth, where the first slot is evenly distributed on different PHY links in the plurality of PHY links.

Optionally, after that the second network device determines a first slot based on the slot allocation policy and the required bandwidth, the method further includes: When the PHY link on which the first slot is located is faulty, the second network device determines a second slot based on the slot allocation policy and the required bandwidth of the first service flow, where the second slot is different from the first slot. The second network device receives the first service flow from the first network device based on the second slot.

When the PHY link is faulty, a slot is redetermined based on the slot allocation policy. Because a receive end and a transmit end do not need to perform a negotiation procedure, a delay caused by the negotiation procedure is avoided, traffic interruption time can be controlled within 50 milliseconds, and it is ensured that the service flow is quickly recovered within 50 milliseconds. Therefore, a fault recovery speed of a service is greatly improved. In another aspect, after the PHY link is faulty, the receive end and the transmit end redetermine slots based on the same slot allocation policy and the same required bandwidth. Therefore, the new slots determined by the receive end and the transmit end are the same, so that slot arrangements of the receive end and the transmit end are consistent after slot migration. In this case, the receive end and the transmit end can normally transmit the service flow based on the consistent slot arrangements, so that a protection switching function is implemented between different PHY links in the FlexE group, the service flow on the faulty PHY link is switched to a normal PHY link, and transmission interruption of the service flow is avoided.

Optionally, that the second network device determines a second slot based on the slot allocation policy and the required bandwidth of the first service flow includes: If an idle slot meets the required bandwidth, the second network device determines, in the idle slot based on the slot allocation policy and the required bandwidth, the second slot that meets the required bandwidth.

Optionally, that the second network device determines a second slot based on the slot allocation policy and the required bandwidth of the first service flow includes: If an idle slot does not meet the required bandwidth, the second network device determines, in the idle slot based on the slot allocation policy and the active bandwidth, the second slot that meets the active bandwidth, where the active bandwidth is less than the required bandwidth, and the active bandwidth is the minimum required bandwidth on which the second network device can start the transmission of the first service flow.

Optionally, that the second network device determines a second slot based on the slot allocation policy and the required bandwidth of the first service flow includes: If an idle slot does not meet the required bandwidth, the second network device determines, based on the slot allocation policy and the priority of the first service flow, the second slot in a slot occupied by the second service flow, where the priority of the second service flow is lower than the priority of the first service flow.

Optionally, that the second network device determines a second slot based on the slot allocation policy and the required bandwidth of the first service flow includes: The second network device determines, based on the slot allocation policy, a first PHY link with a smallest physical interface number in an available PHY link of the FlexE group. The second network device determines, based on the required bandwidth, the second slot with a smallest slot number in an idle slot of the first PHY link.

Optionally, that the second network device determines a second slot based on the slot allocation policy and the required bandwidth of the first service flow includes: The second network device determines, based on the slot allocation policy, a second PHY link with smallest load in an available PHY link of the FlexE group. The second network device determines, based on the required bandwidth, the second slot with a smallest slot number in an idle slot of the second PHY link.

Optionally, that the second network device determines a second slot based on the slot allocation policy and the required bandwidth of the first service flow includes: The second network device determines the second slot in idle slots of a plurality of PHY links based on the slot allocation policy and the required bandwidth, where the second slot is evenly distributed on different PHY links in the plurality of PHY links.

Optionally, that a second network device obtains a slot allocation policy includes: The second network device receives the slot allocation policy from the first network device.

The slot allocation policy is obtained in a push manner. In an aspect, policy consistency between the RX end and the TX end is ensured. Therefore, it is ensured that in various slot migration scenarios such as a PHY link fault, PHY link addition or deletion, and required bandwidth update, because the RX end and the TX end use the consistent slot allocation policy, slots redeployed by the RX end and the TX end are consistent, and this is conducive to quick traffic recovery. In another aspect, a procedure in which a user configures the slot allocation policy for the RX end is avoided, so that configuration complexity is reduced, and efficiency of deploying the slot allocation policy is improved.

Optionally, that the second network device receives the slot allocation policy from the first network device includes: The second network device receives a negotiation request of the first network device, where the negotiation request indicates the slot allocation policy. The second network device determines the slot allocation policy based on the negotiation request.

Optionally, after that the second network device determines a first slot based on the slot allocation policy and the required bandwidth, the method further includes: When the required bandwidth of the first service flow is updated, the second network device determines a third slot based on the slot allocation policy and an updated required bandwidth of the first service flow, where the third slot is different from the first slot. The second network device receives the first service flow from the first network device based on the third slot.

Optionally, after that the second network device determines a first slot based on the slot allocation policy and the required bandwidth, the method further includes: When a PHY link is added to the FlexE group in which the first slot is located, the second network device determines, based on the slot allocation policy and the required bandwidth of the first service flow, a fourth slot in slots of a FlexE group obtained after the PHY link is added, where the fourth slot is different from the first slot. The second network device receives the first service flow from the first network device based on the fourth slot.

Optionally, after that the second network device determines a first slot based on the slot allocation policy and the required bandwidth, the method further includes: When a PHY link is deleted from the FlexE group in which the first slot is located, the second network device determines, based on the slot allocation policy and the required bandwidth of the first service flow, a fifth slot in a slot of a FlexE group obtained after the PHY link is deleted, where the fifth slot is different from the first slot. The second network device receives the first service flow from the first network device based on the fifth slot.

Optionally, after that the second network device determines a first slot based on the slot allocation policy and the required bandwidth, the method further includes: When a to-be-transmitted third service flow is added or an originally transmitted fourth service flow is deleted, the second network device determines a sixth slot based on the slot allocation policy and the required bandwidth of the first service flow, where the sixth slot is different from the first slot. The second network device receives the first service flow from the first network device based on the sixth slot.

According to a third aspect, a first network device is provided. The first network device has a FlexE-based service flow transmission function in any one of the first aspect or the optional manners of the first aspect. The first network device includes at least one module, and the at least one module is configured to implement the FlexE-based service flow transmission method according to any one of the first aspect or the optional manners of the first aspect. For specific details of the first network device provided in the third aspect, refer to any one of the first aspect or the optional manners of the first aspect. Details are not described herein again.

According to a fourth aspect, a second network device is provided. The second network device has a FlexE-based service flow transmission function in any one of the second aspect or the optional manners of the second aspect. The second network device includes at least one module, and the at least one module is configured to implement the FlexE-based service flow transmission method according to any one of the second aspect or the optional manners of the second aspect. For specific details of the second network device provided in the fourth aspect, refer to any one of the second aspect or the optional manners of the second aspect. Details are not described herein again.

According to a fifth aspect, a first network device is provided. The first network device includes a processor and a physical interface. The processor is configured to execute instructions, so that the first network device performs the FlexE-based service flow transmission method according to any one of the first aspect or the optional manners of the first aspect. The physical interface is configured to send a service flow. For specific details of the first network device provided in the fifth aspect, refer to any one of the first aspect or the optional manners of the first aspect. Details are not described herein again.

According to a sixth aspect, a second network device is provided. The second network device includes a processor and a physical interface. The processor is configured to execute instructions, so that the second network device performs the FlexE-based service flow transmission method according to any one of the second aspect or the optional manners of the second aspect. The physical interface is configured to receive a service flow. For specific details of the second network device provided in the sixth aspect, refer to any one of the second aspect or the optional manners of the second aspect. Details are not described herein again.

According to a seventh aspect, a computer-readable storage medium is provided. The storage medium stores at least one instruction. When the instruction is read by a processor, a first network device is enabled to perform the FlexE-based service flow transmission method according to any one of the first aspect or the optional manners of the first aspect.

According to an eighth aspect, a computer-readable storage medium is provided. The storage medium stores at least one instruction. When the instruction is read by a processor, a second network device is enabled to perform the FlexE-based service flow transmission method according to any one of the second aspect or the optional manners of the second aspect.

According to a ninth aspect, a computer program product is provided. When the computer program product runs on a first network device, the first network device is enabled to perform the FlexE-based service flow transmission method according to any one of the first aspect or the optional manners of the first aspect.

According to a tenth aspect, a computer program product is provided. When the computer program product runs on a second network device, the second network device is enabled to perform the FlexE-based service flow transmission method according to any one of the second aspect or the optional manners of the second aspect.

According to an eleventh aspect, a chip is provided. When the chip runs on a first network device, the first network device is enabled to perform the FlexE-based service flow transmission method according to any one of the first aspect or the optional manners of the first aspect.

According to a twelfth aspect, a chip is provided. When the chip runs on a second network device, the second network device is enabled to perform the FlexE-based service flow transmission method according to any one of the second aspect or the optional manners of the second aspect.

According to a thirteenth aspect, a network system is provided. The network system includes a first network device and a second network device. The first network device is configured to perform the method according to any one of the first aspect or the optional manners of the first aspect, and the second network device is configured to perform the method according to any one of the second aspect or the optional manners of the second aspect.

According to a fourteenth aspect, a first network device is provided. The first network device includes a central processing unit, a network processor, and a physical interface. The central processing unit is configured to: obtain a slot allocation policy; and determine a first slot based on the slot allocation policy and a required bandwidth. The network processor is configured to trigger the physical interface to send a first service flow to a second network device based on the first slot.

Optionally, the first network device includes a main control board and an interface board, the central processing unit is disposed on the main control board, the network processor and the physical interface are disposed on the interface board, and the main control board is coupled to the interface board.

In a possible implementation, an inter-process communication (inter-process communication, IPC) channel is established between the main control board and the interface board, and the main control board and the interface board communicate with each other through the IPC channel.

According to a fifteenth aspect, a second network device is provided. The second network device includes a central processing unit, a network processor, and a physical interface.

The central processing unit is configured to: obtain a slot allocation policy; and determine a first slot based on the slot allocation policy and a required bandwidth. The network processor is configured to trigger the physical interface to receive a first service flow from a first network device based on the first slot.

Optionally, the second network device includes a main control board and an interface board, the central processing unit is disposed on the main control board, the network processor and the physical interface are disposed on the interface board, and the main control board is coupled to the interface board.

In a possible implementation, an IPC channel is established between the main control board and the interface board, and the main control board and the interface board communicate with each other through the IPC channel.

### BRIEF DESCRIPTION OF DRAWINGS

FIG. 1 is a schematic diagram of a structure of a FlexE group according to an embodiment of this application;
FIG. 2 is a schematic diagram of a data structure in FlexE according to an embodiment of this application;
FIG. 3 is a schematic diagram of structures of an overhead frame and an overhead multiframe according to an embodiment of this application;
FIG. 4 is a schematic diagram of interconnection between a receive end and a transmit end in FlexE according to an embodiment of this application;
FIG. 5 is a schematic diagram of a slot configuration according to an embodiment of this application;
FIG. 6 is a schematic diagram of a system architecture 100 according to an embodiment of this application;
FIG. 7 is a schematic diagram of a system architecture 200 according to an embodiment of this application;
FIG. 8 is a schematic diagram of a resource management layer according to an embodiment of this application;
FIG. 9 is a flowchart of a FlexE-based service flow transmission method 300 according to an embodiment of this application;
FIG. 10 is a schematic diagram of an LLDPDU in an LLDP frame according to an embodiment of this application;
FIG. 11 is a schematic diagram of protection switching between different PHY links in a FlexE group according to an embodiment of this application;
FIG. 12A and FIG. 12B are a flowchart of a FlexE-based service flow transmission method 400 according to an embodiment of this application;
FIG. 13 is a schematic diagram of a structure of a network device 500 according to an embodiment of this application;
FIG. 14 is a schematic diagram of a structure of a network device 600 according to an embodiment of this application;
FIG. 15 is a schematic diagram of a structure of a network device 700 according to an embodiment of this application;
FIG. 16 is a schematic diagram of a structure of a network device 800 according to an embodiment of this application; and
FIG. 17 is a schematic diagram of a structure of a network system 900 according to an embodiment of this application.

### DETAILED DESCRIPTION OF EMBODIMENTS

To make objectives, technical solutions, and advantages of this application clearer, the following further describes implementations of this application in detail with reference to the accompanying drawings.

In this application, terms such as "first" and "second" are used to distinguish between same items or similar items that have basically same purposes or functions. It should be understood that there is no logical or time sequence dependency between "first" and "second", and a quantity and an execution sequence are not limited. It should be further understood that although the terms such as "first" and "second" are used in the following descriptions to describe various elements, these elements should not be limited by the terms. These terms are merely used to distinguish one element from another element. For example, without departing from the scope of various examples, a first network device may be referred to as a second network device. Similarly, a second network device may be referred to as a first network device. Both the first network device and the second network device may be network devices, and in some cases, may be separate and different network devices. Similarly, "first" and "second" are used to distinguish between different "slots" or different "service flows", and constitute no limitation on the protection scope of embodiments of this application.

It should be further understood that the term "if" may be interpreted as a meaning of "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

Because embodiments of this application relate to application of a flexible Ethernet (Flexible Ethernet, FlexEth or FlexE) technology, for ease of understanding, the following first describes the FlexE technology and related concepts of terms in the FlexE technology in embodiments of this application.

### (1) FlexE

With diversification of internet protocol (internet protocol, IP) network applications and services, there is a growing trend of increasing network traffic. Ethernet interface standard formulation and product development are step-by-step, and current Ethernet interface standards specify fixed rates. Therefore, there is a gap between a transmission requirement and an actual interface capability of a device, and a requirement for a higher bandwidth usually needs to be met at a current Ethernet interface rate level. In this case, an optical internetworking forum (optical internetworking forum, OIF) FlexE technology creates an adaptation layer between a media access control (media access control, MAC) layer and a physical coding sublayer (physical coding sublayer, PCS), so that an Ethernet interface rate can flexibly match a plurality of service scenarios. In addition, when a network processor (network processor, NP)/forwarding device with a higher bandwidth appears, maximum performance of the device can be reached without waiting for a new fixed-rate Ethernet standard to be released. The adaptation layer is referred to as a FlexE shim (shim).

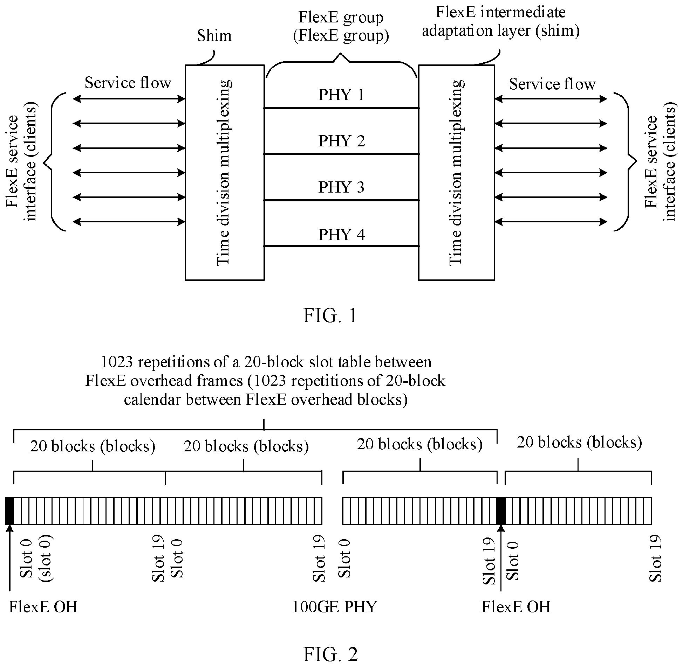

A basic function of FlexE is to map, based on a time division multiplexing (time division multiplexing, TDM) mechanism of the FlexE shim, M FlexE service flows (clients) to a flexible Ethernet group (FlexE group) including N physical layer (Physical Layer, PHY) links. Both M and N are positive integers. A basic architecture of FlexE may be shown in FIG. 1. M is 6 and N is 4. To be specific, in FlexE shown in FIG. 1, service flows of six FlexE clients are mapped, based on the TDM mechanism of the FlexE shim, to a FlexE group including four PHY links.

A 100 Gigabit Ethernet (Gigabit Ethernet, GE) PHY is used as an example. In a FlexE mapping mechanism, each 100G PHY corresponds to slots (time slots, TSs) corresponding to twenty 64-bit (bit, B)/66B blocks (blocks), and each block corresponds to a payload rate (payload rate) of a 5 Gbps (switching bandwidth) rate. Current FlexE standards support FlexE on 100GE, 200GE, 400GE, and 50GE interfaces. A format of data passing through one 100GE PHY is shown in FIG. 2. In FIG. 2, each block is a 64B/66B block encoded (encoded) according to IEEE 802.3 Clause 82, every 20 blocks form one slot table (calendar), and each block is one slot in the TDM mapping mechanism. One 64B/66B encoded overhead block (overhead block) is inserted after 1023 repetitions of each calendar. Then, every eight overhead blocks form one overhead frame, and every 32 overhead frames form one overhead multiframe. Client-slot mapping (client-slot mapping) and various types of management of entire FlexE are implemented in overhead multiframes.

### (2) Shim

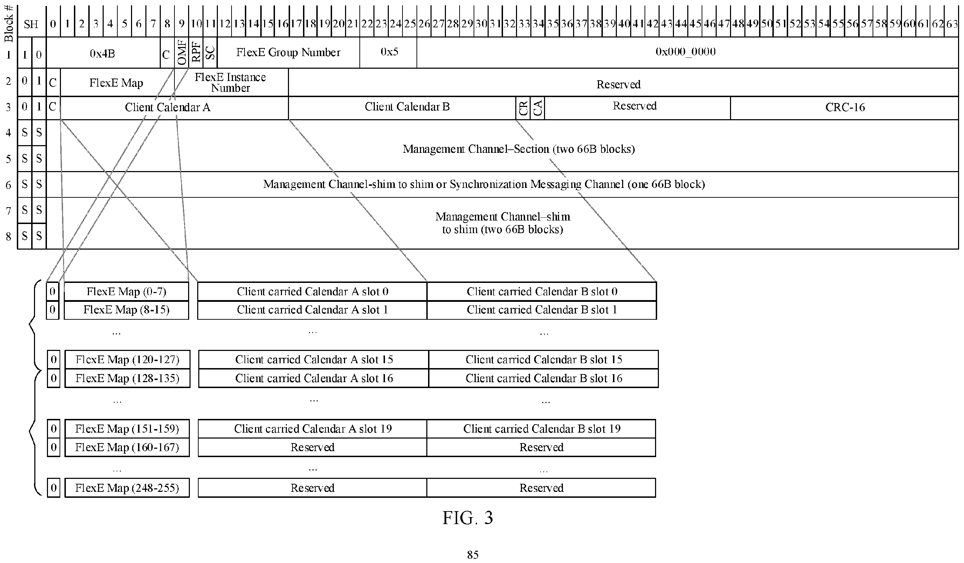

The shim performs slot slicing on bandwidth resources of an Ethernet port based on a 64B/66B block (a block whose basic unit is 66B), and uniformly numbers slots obtained after slicing, to obtain a slot number corresponding to each slot. A shim of a transmit (transmit, TX) end performs slicing on service data, encapsulates sliced service data into pre-divided slots, and transfers a mapping relationship between a service flow of the local end and a slot number to a receive (receive, RX) end by using a calendar in an overhead frame overhead. The RX end extracts the mapping relationship between a service flow and a slot number from the overhead frame overhead, and reassembles a service flow in a specific slot based on the mapping relationship. The shim may correspond to a network device. For the overhead frame overhead, refer to a schematic diagram of a frame structure shown in FIG. 3.

### (3) FlexE group

The FlexE group is also referred to as a FlexE bonding group or a bonding group. The FlexE group includes one or more PHYs, for example, may include 1 to 254 PHYs supporting a rate of 100 GE. 0 and 255 are reserved bits. A bandwidth resource corresponding to a FlexE group is a sum of bandwidth resources corresponding to PHYs in the FlexE group. Therefore, a higher transmission rate and a larger transmission bandwidth can be met in FlexE based on the FlexE group. In FlexE, a plurality of service flows may be transmitted in parallel by using the FlexE group, and service data of a same service flow may be carried in one PHY in the FlexE group, or may be carried in different PHYs in the FlexE group. In other words, service data of a same service flow may be transmitted to a peer end by using one PHY in the FlexE group, or may be transmitted to the peer end by using a plurality of PHYs in the FlexE group. For brevity, in subsequent descriptions in embodiments of this application, a specific FlexE group is represented in a simplified form of "GRP+number" without causing difficulty in understanding. For example, a FlexE group is represented in a simplified form of "GRP 1". Optionally, the number in "GRP+number" is a group identifier of the FlexE group.

### (4) Group identifier

The group identifier (group number, which is also referred to as a GRP_Number, a GRP ID, a group number, or a group ID) is used to identify a group of physical interfaces (a FlexE group). With reference to a frame overhead shown in FIG. 3, a GRP_ID parameter is represented in a fixed field of an overhead frame of each physical interface belonging to a FlexE group. It may be considered that the GRP_ID is an identifier of a large physical channel. Group identifiers of two ends between which the FlexE group is interconnected may be consistent.

### (5) PHY link

The PHY may be defined as providing mechanical, electronic, functional, and normative features for establishing, maintaining, and deleting physical links required for data transmission. The PHY mentioned in this specification may include physical layer working components at a transmit end and a receive end, and a transmission medium (for example, an optical fiber) between the transmit end and the receive end. The physical layer working component may include, for example, a physical layer interface device (physical layer interface device) in the Ethernet. Therefore, in this specification, one PHY link may be understood as a physical layer channel, and the physical layer channel includes a port of an RX end device, a port of a TX end device, and a communication link between the two ports. For brevity, in subsequent descriptions in embodiments of this application, a specific PHY link is represented in a simplified form of "PHY+number" without causing difficulty in understanding. For example, a PHY link is represented in a simplified form of "PHY 1". Optionally, the number in "PHY+number" is a physical interface number of the PHY link.

### (6) Physical interface number

The physical interface number (PHY number, which is also referred to as a physical interface number, a physical interface identifier, or a physical interface ID) is an identifier of a physical interface. In FlexE, a multiframe is formed based on the physical interface number, and slots on a plurality of PHY links are uniformly numbered based on the physical interface number. Usually, physical interface numbers of a PHY link at a receive end and a transmit end may be the same. Alternatively, physical interface numbers of a PHY link at a receive end and a transmit end are different, but the physical interface numbers at the receive end and the transmit end have a one-to-one correspondence.

### (7) Slot

The slot is a time slice in a time division multiplexing mode. For example, a FlexE group with a bandwidth of 100G has 20 slots with a bandwidth of 5G. In addition, in a scenario of supporting a bandwidth at a granularity of 1G, each slot with a bandwidth of 5G may be divided into five sub-slots with a bandwidth of 1G. For brevity, in subsequent descriptions in embodiments of this application, a slot is represented in a simplified form of "TS+number" without causing difficulty in understanding. For example, a slot is represented in a simplified form of "TS 1". Optionally, the number in "TS+number" is a slot number.

### (8) Slot number

The slot number (TS number or TS_NUM, which is also referred to as a ts no, a TS identifier, or a TS ID) is used to identify a corresponding slot. One FlexE group usually has a plurality of slots, these slots are uniformly numbered, and each slot corresponds to one slot number.

### (9) Service flow

Service flows (clients) correspond to various service interfaces in a network, which are consistent with conventional service interfaces in an IP network/the Ethernet (Ethernet). The FlexE client may be flexibly configured based on a bandwidth requirement, and supports Ethernet MAC data flows of various rates (for example, data flows of 10G, 40G, n^{∗}25G, and even a non-standard rate). The data flows are transferred to a FlexE shim layer in a 64B/66B coding manner. For brevity, in subsequent descriptions in embodiments of this application, a service flow is represented in a simplified form of "client+number" without causing difficulty in understanding. For example, a service flow is represented in a simplified form of "client 1". Optionally, the number in "client+number" is a service flow identifier.

### (10) Service flow identifier

The service flow identifier (client ID) is used to identify a service flow. One or more service flows may be created based on a FlexE group, and different service flows may be distinguished by using different service flow identifiers.

Refer to FIG. 3. Formats of an overhead frame (also referred to as a management frame) and an overhead multiframe are shown in FIG. 3. A client id is represented in a calendar of the multiframe overhead. As shown in FIG. 3, the FlexE overhead (overhead, OH) includes slot table configuration information of all FlexE clients in a FlexE group. In a related technology, to avoid a traffic loss when a slot bandwidth configuration of the FlexE client is changed, two slot tables may be used: a calendar A and a calendar B. The two slot tables have the following features.

Feature 1: At any time, only one slot table is in a working state. To be specific, at any time, either the calendar A is in the working state, or the calendar B is in the working state.

Feature 2: A slot negotiation mechanism of the FlexE OH overhead is used for a TX end and an RX end between which the FlexE group is interconnected, to ensure that working slot tables of the TX end and the RX end are consistent.

For example, if the calendar A is in the working state, the calendar B is in a backup state of a corresponding slot configuration.

Feature 3: The TX end initiates slot negotiation, and the RX end is in a passive receiving state. If the calendar A is in the working state, the TX end sends a changed calendar B to the RX end through refreshing by using the FlexE OH overhead. Subsequently, the TX end initiates a slot table switch request (calendar switch request, CSR) slot negotiation request for switching a working table to the calendar B. After the TX end receives a response from the RX end, the TX end triggers both the TX end and the RX end to switch the working tables to the calendar B.

It should be noted that, after a connection is established for the first time between the TX end and the RX end between which the FlexE group is interconnected, slot negotiation of the FlexE OH overhead is also triggered once, to ensure that the working slot tables of the two ends are consistent.

In addition to the foregoing calendar A and calendar B, FIG. 3 further includes the following information.

C: C indicates a slot configuration in use (calendar configuration in use). In the overhead frame shown in FIG. 3, a bit field numbered 8 in the first block, a bit field numbered 0 in the second block, and a bit field numbered 0 in the third block each carry C.

Overhead multiframe indicator (overhead multiframe indicator, OMFI): The OMFI is referred to as an OMF in standards such as the IA OIF-FlexE-01.0/01.1/02.2/02.1, and indicates a boundary of the multiframe. In the overhead frame shown in FIG. 3, a bit field numbered 9 in the first block carries the OMF. In one multiframe, values of OMFs of first 16 single frames are 0, and values of OMFs of last 16 single frames are 1. A boundary of the multiframe can be determined through conversion between 0 and 1.

Remote physical fault (remote PHY fault, RPF): The remote physical fault indicates a remote physical fault. In the overhead frame shown in FIG. 3, a bit field numbered 10 in the first block carries the RPF.

Synchronization control (synchronization control, SC): The SC is used for synchronization control. In the overhead frame shown in FIG. 3, a bit field numbered 11 in the first block carries the SC.

Flexible Ethernet map (FlexE Map): The FlexE map is used for control of which FlexE instances are members of this group (Control of which FlexE Instances are members of this group). In the overhead frame shown in FIG. 3, bit fields numbered 1 to 8 in the second block carry the FlexE map. For example, the FlexE map includes PHY link information in the FlexE group, each bit of the FlexE map corresponds to one PHY link, and a value of each bit of the FlexE map indicates whether the PHY link corresponding to the bit is in the FlexE group. For example, if a value of a bit is a first value, for example, the first value is 1, it is considered that a PHY link corresponding to the bit is in the FlexE group. If a value of a bit is a second value, for example, the second value is 0, it is considered that a PHY link corresponding to the bit is not in the FlexE group.

Flexible Ethernet instance number (FlexE instance Number): The FlexE instance number indicates an identity of this FlexE instance within the group (Identity of this FlexE instance within the group). In the overhead frame shown in FIG. 3, bit fields numbered 9 to 16 in the second block carry the FlexE instance number.

Flexible Ethernet group identifier: In the overhead frame shown in FIG. 3, bit fields numbered 12 to 31 in the first block carry the group number.

Slot table switch acknowledgement (calendar switch acknowledgement, CSA): The CSA is referred to as a CA in standards such as the implementation agreement (implementation agreement, IA) OIF-FlexE-01.0/01.1/02.2/02.1, where 01.0, 01.1, 02.2, and 02.1 are several versions of the IA OIF-FlexE standard. In the overhead frame shown in FIG. 3, a bit field numbered 34 in the third block carries the CA.

Slot table switch request (calendar switch request, CSR): The CSR is referred to as a CR in standards such as the IA OIF-FlexE-01.0/01.1/02.2/02.1. In the overhead frame shown in FIG. 3, a bit field numbered 33 in the third block carries the CR.

Synchronization header (synchronization header, SH): The SH is a frame header of the overhead frame shown in FIG. 3.

S: S indicates a valid synchronization header bit (valid sync header bit). In the overhead frame shown in FIG. 3, fields in SHs in the fourth block to the eighth block each carry the S.

Management channel (Management Channel): In the overhead frame shown in FIG. 3, the fourth block to the eighth block carry the management channel.

CRC-16: The CRC-16 is used to perform cyclic redundancy check (cyclic redundancy check, CRC) protection on content of an overhead block. In the overhead frame shown in FIG. 3, bit fields numbered 48 to 63 in the third block carry the CRC-16.

In addition to the fields including the foregoing information, FIG. 3 further includes a reserved (reserved) field. In the overhead frame shown in FIG. 3, bit fields numbered 17 to 63 in the second block and bit fields numbered 35 to 47 in the third block each are a reserved field.

The foregoing describes the FlexE technology and the related concepts of the terms. The following describes specific applications of the FlexE technology by using examples.

The FlexE technology is currently in a commercial promotion phase. In consideration of configuration resources and definitions in a protocol that are presented to applications and a difference between resource configurations at different rate levels, in a service flow establishment process between two ends, a user needs to deeply intervene in networking, a PHY link, a PHY link rate, a slot, a sub-slot bonding policy, and a sub-slot bonding limitation of a FlexE group. The following briefly describes the service flow establishment process between the two ends.

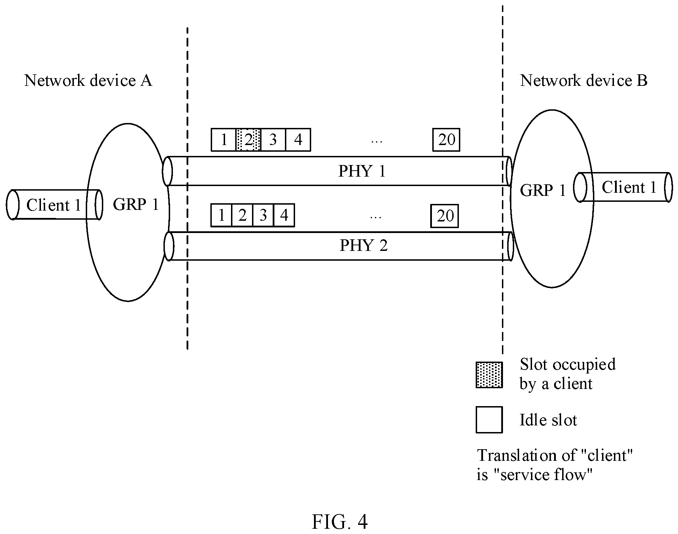

FIG. 4 shows an interconnection model of a transmit end and a receive end. A user forms a 200G FlexE group. The FlexE group includes two 100G PHY links, and each PHY link has twenty 5G slots. In a process of establishing the FlexE group and interconnecting a service flow between the two ends, the user needs to configure many parameters such as a group identifier, a physical interface number, a slot number, and a flow identifier.

For example, to establish a client 1, the following S1 to S6 need to be performed. The client 1 is a service flow transmitted from a network device A to a network device B. The client 1 requires a bandwidth of 5G.

S1: The user creates a service flow on the network device A, and configures a flow identifier of the service flow as the client 1.

S2: The user creates a service flow on the network device B, and configures a flow identifier of the service flow as the client 1. In other words, the flow identifier configured on the network device B needs to be consistent with the flow identifier configured on the network device A.

S3: The user specifies, on the network device A, that the client 1 is sent in a slot 2 of a physical interface with a PHY number 1 in the FlexE group.

S4: Configuration information (to be specific, a correspondence between the client 1 and the slot 2) of the user in S3 is transferred to the network device B through a FlexE overhead frame.

S5: The network device B extracts the configuration information from the FlexE overhead frame (that is, the overhead frame shown in FIG. 3), and learns that the client 1 is from the slot 2 of the physical interface with the PHY number 1 in the group.

S6: The network device B reestablishes the client in the slot 2, to establish traffic.

The foregoing S1 to S6 are described by using an example in which a transmission direction is from the network device A to the network device B. When the transmission direction of the service flow is from the network device B to the network device A, the user needs to perform a configuration operation on the network device B to configure a mapping relationship between a slot and the service flow. The slot specified on the network device B does not need to be consistent with the slot specified on the network device A. In other words, a receive slot and a transmit slot of a client may be inconsistent.

However, when the foregoing method is implemented, many problems are faced.

From a perspective of configuration difficulty, as the IA OIF-FlexE-02.0 extends a protocol, 200G and 400G port types are added. In protocol overheads, a PHY number defined in 1.0 is modified to an instance number, and a quantity of resource levels is increased by one. As a result, it is more difficult to manage slot configuration by the user. The user needs to understand at least the following (1) to (5):
(1) specific physical interfaces bonded to the FlexE group;
(2) an instance number corresponding to the physical interface;
(3) specific slots that are idle and available in a specific instance;
(4) specific sub-slots that are idle and available in a specific slot; and
(5) a bonding limitation that may exist between a plurality of idle sub-slots.

To properly plan slots, the user need to fully understand the foregoing configuration information and limitation in the protocol and need to be fully aware of a slice usage situation. This imposes high requirements on O&M personnel.

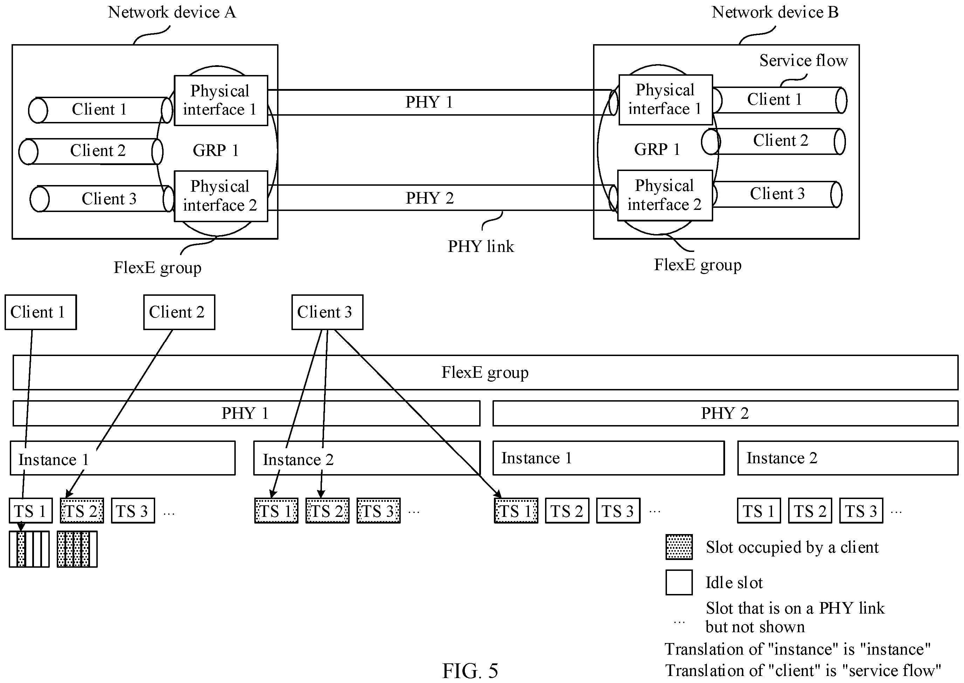

Refer to FIG. 5. The following describes complexity of slot configuration with reference to a service deployment scenario.

A user deploys a FlexE group between a network device A and a network device B. The FlexE group includes two 200G FlexE physical interfaces, and a total bandwidth of the FlexE group is 400G. In an initial running phase, the user creates three service flows: a client 1, a client 2, and a client 3.

A bandwidth of the client 1 is 1G. In a process of configuring a slot for the client 1, because a 1G slot is time-division multiplexed based on a 5G slot, one 5G slot may be split into five 1G sub-slots. The user first needs to check whether a 5G slot that has been split currently exists in all 5G slots of the FlexE group and whether an idle 1G sub-slot still exists. If an idle 1G sub-slot exists, the user designates one idle sub-slot to the client 1 from the idle sub-slot. If no idle 1G sub-slot exists, the user selects an idle main slot and obtains five 1G sub-slots based on the main slot through splitting. The user selects one 1G sub-slot and allocates the sub-slot to the client 1.

A bandwidth of the client 2 is 5G. In a process of configuring a slot for the client 2, the user selects any idle 5G slot and allocates the slot to the client 2.

A bandwidth of the client 3 is 15G. In a process of configuring a slot for the client 3, the user selects any three idle 5G slots and allocates the slots to the client 3.

In conclusion, a process of configuring slots by the user is complex.

From a perspective of network operation and maintenance, the physical interface in the FlexE group may be faulty. For example, if an optical fiber is damaged or aged, the physical interface may be faulty. Currently, an impact scope of a fault of the physical interface on the service flow is uncontrollable. Whether the service flow is affected depends on slot configuration of the user. Specifically, after the user deploys a slot on a PHY link for the service flow, if a physical interface corresponding to the PHY link is faulty, the physical interface cannot be used to transmit the service flow. As a result, transmission of the service flow is interrupted. In other words, when the slot deployed by the user is just provided by the faulty physical interface, the service flow is affected. In addition, fault recovery of the service flow depends on available slot redeployment of the user for the service flow. In other words, as long as the user does not re-designate a corresponding slot for the service flow, because a slot allocated to the service flow is always the slot on the faulty PHY link, the service flow is always in an interrupted state, and it is difficult to recover from a faulty state in time. In addition, because a service protection capability of the current FlexE group is insufficient, protection can be implemented only between different FlexE groups, and 1:1 or N: 1 protection cannot be implemented between physical interfaces in the FlexE group.

In view of the foregoing described applications of the FlexE technology, embodiments of this application provide a FlexE-based service flow transmission solution. A receive end and a transmit end of a service flow automatically allocate a slot to the service flow based on a slot allocation policy with reference to a required bandwidth of the service flow, and transmit the service flow based on the allocated slot. From a perspective of configuration difficulty, because a user does not need to perceive how slots are arranged, a complex operation of slot configuration is avoided. Therefore, the configuration difficulty is greatly reduced. From a perspective of network operation and maintenance, when a physical interface or a PHY link is faulty, the receive end and the transmit end of the service flow can automatically re-allocate a slot based on the original slot allocation policy and required bandwidth of the service flow. In this way, the service flow is automatically switched from an unavailable slot to a newly allocated slot, so that dynamic slot migration is implemented, and quick fault recovery of the service flow is implemented.

The following describes the technical solutions provided in embodiments of this application from a plurality of perspectives such as a system architecture, a method, a virtual apparatus, an entity apparatus, and a medium.

The following describes system architectures provided in embodiments of this application.

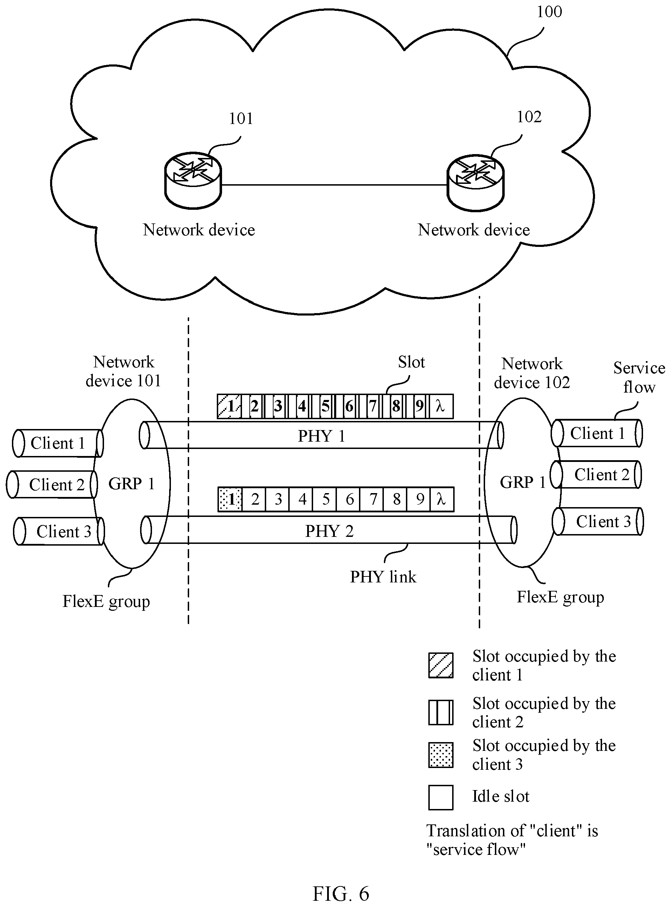

Refer to FIG. 6. An embodiment of this application provides a system architecture 100. The system architecture 100 is an example of a hardware environment on which a method 300 is based. The system architecture 100 includes a network device 101 and a network device 102. The network device 101 and the network device 102 are, for example, routers or switches.

The network device 101 and the network device 102 establish one or more FlexE groups, and each FlexE group includes a plurality of PHY links having a bonding relationship. For example, with reference to FIG. 6, the network device 101 and the network device 102 establish a FlexE group whose group identifier is a GRP 1. The FlexE group includes two bonded PHY links, and the two PHY links are separately a PHY 1 and a PHY 2. It should be understood that bonding between different PHY links refers to a logical bonding relationship, and a physical connection relationship does not necessarily exist. In other words, the plurality of PHY links in the FlexE link group may be physically independent of each other. The PHY link includes, for example, an optical fiber.

Each PHY link in the FlexE group may provide at least one slot, and each slot corresponds to a bandwidth of a specific size. A total bandwidth of the FlexE group is, for example, a sum of bandwidths corresponding to all slots on all PHY links. For example, with reference to FIG. 6, a total bandwidth of 100G is configured for the FlexE group, the FlexE group has a total of 20 slots, and each slot corresponds to a bandwidth of 5G. The PHY 1 provides 10 slots, and the PHY 2 provides the other 10 slots.

One or more service flows are transmitted between the network device 101 and the network device 102 through the FlexE group, and each service flow occupies one or more slots on one or more PHY links in the FlexE group. Optionally, slots occupied by a same service flow are distributed on a same PHY link. Alternatively, slots occupied by a same service flow are distributed on a plurality of PHY links, for example, evenly distributed on different PHY links in the FlexE group. For example, with reference to FIG. 6, the network device 101 and the network device 102 create three service flows, and the three service flows are separately a client 1, a client 2, and a client 3. The client 1 uses a bandwidth of 5G, and occupies a TS 1 of the PHY 1. The client 2 uses a bandwidth of 5G, and occupies a TS 1 of the PHY 2. The client 3 uses a bandwidth of 40G, and occupies a TS 2 to a TS 9 of the PHY 1.

Optionally, different PHY links in a same FlexE group between the network device 101 and the network device 102 have a protection relationship. The protection relationship includes but is not limited to a 1:1 protection relationship or an N:1 protection relationship. The 1:1 protection relationship means that one PHY link is used to protect another PHY link. The N:1 protection relationship means that one PHY link is used to protect N PHY links.

The protection relationship includes but is not limited to an active/standby protection relationship and a peer-to-peer protection relationship. For example, different PHY links for which a protection relationship is established are in an active/standby relationship. For example, with reference to FIG. 1, the PHY 1 is an active PHY link, the PHY 2 is a standby PHY link, and the PHY 2 is used to protect the PHY 1. After the PHY 1 is faulty, a service flow on the PHY 1 is switched to the PHY 2. Optionally, different PHY links for which a protection relationship is established are in a peer-to-peer relationship. For example, with reference to FIG. 1, the PHY 1 and the PHY 2 protect each other. After the PHY 1 is faulty, a service flow on the PHY 1 is switched to the PHY 2. After the PHY 2 is faulty, a service flow on the PHY 2 is switched to the PHY 1. Optionally, physical interfaces of the network device 101 and the network device 102 are classified into a working interface and a protection interface. An active PHY link is established between a working interface of the network device 101 and a working interface of the network device 102, and a standby PHY link is established between a protection interface of the network device 101 and a protection interface of the network device 102. One standby PHY link protects one active PHY link, to form a 1:1 protection relationship. Alternatively, one standby PHY link protects N active PHY links, to form an N: 1 protection relationship.

Optionally, each service flow transmitted between the network device 101 and the network device 102 corresponds to one priority. Different service flows have a same priority or have different priorities. For example, with reference to FIG. 6, the client 1, the client 2, and the client 3 each have a priority. For example, in the three service flows, the client 1 has the highest priority, the client 2 has the second highest priority, and the client 3 has the lowest priority. Optionally, a priority of a service flow transmitted on a standby PHY link is lower than a priority of a service flow transmitted on an active PHY link. When the active PHY link is faulty, the service flow on the active PHY link preempts a slot of the standby PHY link, and the service flow on the active PHY link is switched to the standby PHY link.

It should be understood that the scenario of establishing one FlexE group shown in FIG. 6 is merely an example. In addition, the scenario in which the FlexE group includes two PHY links is also merely an example. A quantity of FlexE groups established in the system architecture 100 may be larger or smaller, and a quantity of PHY links included in one FlexE group may be larger or smaller. In this case, although not shown in FIG. 6, the system architecture 100 further includes a FlexE group other than the GRP 1, and the system architecture 100 further includes a PHY link other than the PHY 1 and the PHY 2. The quantity of FlexE groups established in the system architecture 100 and the quantity of PHY links are not limited in this embodiment of this application. For example, with reference to FIG. 1, the network device 101 and the network device 102 may alternately establish four PHY links: a PHY 1, a PHY 2, a PHY 3, and a PHY 4.

The foregoing system architecture 100 focuses on an overall network architecture. The following describes a logical function architecture inside a device by using a system architecture 200.

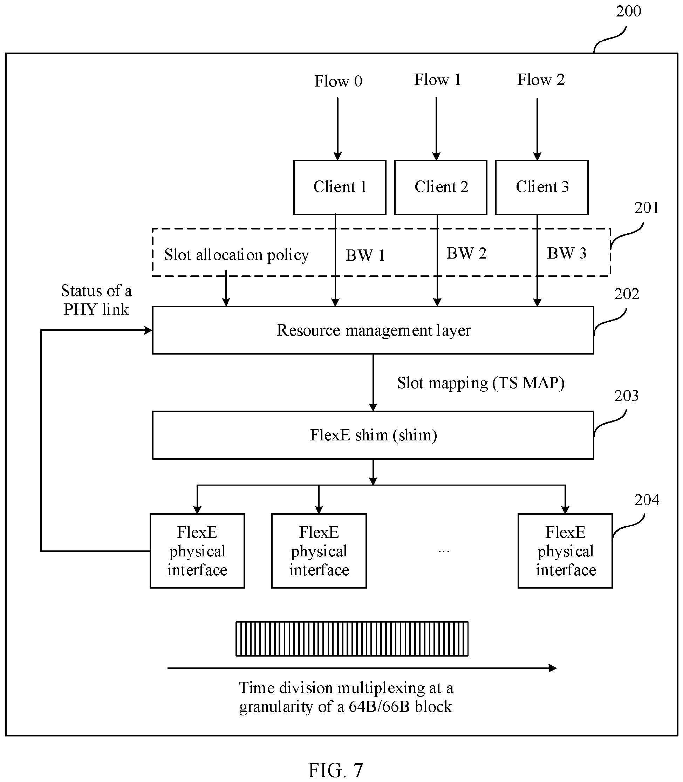

Refer to FIG. 7. An embodiment provides another system architecture 200. The system architecture 200 is an example of a logical function architecture of a network device.

The system architecture 200 includes a user configuration layer 201, a resource management layer (also referred to as a resource management layer, an RS MNG layer, a resource management sublayer, or an RS MNG) 202, a shim layer 203, and a FlexE physical interface 204. In a view of a FlexE service architecture, the resource management layer 202 is located between the user configuration layer 201 and the shim layer 203.

The user configuration layer 201 is configured to receive and save configuration information of a user, for example, save a slot allocation policy and a required bandwidth of a service flow. Optionally, the slot allocation policy includes a slot allocation policy (also referred to as a bandwidth allocation policy) used when a PHY link is normal and a slot allocation policy (also referred to as a slot migration policy) used when the PHY link is faulty. The user configuration layer 201 saves the bandwidth allocation policy and the slot migration policy. Optionally, the user configuration layer 201 saves a correspondence between a service flow identifier and a required bandwidth. For example, with reference to FIG. 7, a required bandwidth (Bandwidth, BW) of a client 1 is a BW 1, a required bandwidth of a client 2 is a BW 2, and a required bandwidth of a client 3 is a BW 3. The user configuration layer 201 saves a correspondence between the client 1 and the BW 1, a correspondence between the client 2 and the BW 2, and a correspondence between the client 3 and the BW 3.

For a function of the shim layer 203, refer to the foregoing descriptions of the term (2).

The resource management layer 202 is configured to manage a slot. Functions of the resource management layer 202 include the following functions (1) to (5). For implementation of each function, refer to the following method 300 or method 400.

Function (1): Shield slot management details for the user, where the user directly plans and configures a required bandwidth of a client and does not need to be aware of slot arrangement.

Function (2): Receive the slot allocation policy customized by the user, and autonomously implement slot management, maintenance, and allocation based on the slot allocation policy.

Function (3): In a scenario in which the PHY link is faulty, autonomously implement slot migration based on the slot allocation policy customized by the user.

Function (4): Implement a negotiation mechanism between network elements at two ends based on the link layer discovery protocol (Link Layer Discovery Protocol, LLDP), so that a local end can push a slot allocation policy and receive the slot allocation policy from a peer end.

The pushed slot allocation policy is used by the local end to allocate a slot in a TX direction in a slot migration process. The received slot allocation policy is used by the local end to allocate a slot in an RX direction in a slot migration process.

Function (5): Monitor a status of the FlexE physical interface 204, quickly respond to a faulty state of the FlexE physical interface 204, and perform slot migration in the TX direction or the RX direction based on a predetermined slot allocation policy.

The foregoing system architecture 200 describes the overall logical function architecture. The following describes in detail the resource management layer 202 in the system architecture 200.

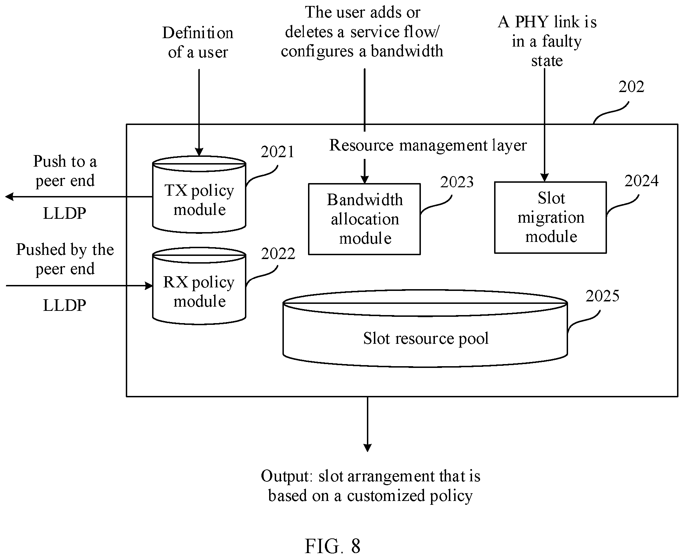

The resource management layer 202 includes at least one functional module, and each functional module is implemented by using software. In other words, the functional module is generated after a processor of the network device reads program code stored in a memory. For example, with reference to FIG. 8, functional modules of the resource management layer 202 include a TX policy module 2021, an RX policy module 2022, a bandwidth allocation module 2023, a slot migration module 2024, and a slot resource pool 2025.

The TX policy module 2021 is configured to save the slot allocation policy based on a definition of the user. The TX policy module 2021 is further configured to push the slot allocation policy to the peer end based on the LLDP. The TX policy module 2021 is further configured to allocate the slot in the TX direction based on the slot allocation policy.

The RX policy module 2022 is configured to: receive the slot allocation policy pushed by the peer end, and save the slot allocation policy. The RX policy module 2022 is further configured to allocate the slot in the RX direction based on the slot allocation policy.

The bandwidth allocation module 2023 is configured to: when the user adds or deletes a service flow, configures the required bandwidth, or does another operation, allocate a slot based on the required bandwidth of the service flow and the slot allocation policy saved by the TX policy module 2021.

The slot migration module 2024 is configured to: when the PHY link is in a faulty state, allocate a slot based on the required bandwidth of the service flow and the slot allocation policy saved by the RX policy module 2022.

The slot resource pool 2025 is configured to save and maintain an idle slot of the PHY link.

The foregoing describes the system architecture 100 and the system architecture 200. The following describes, by using the method 300, an example of a method procedure of transmitting a service flow based on the system architecture 100 and the system architecture 200.

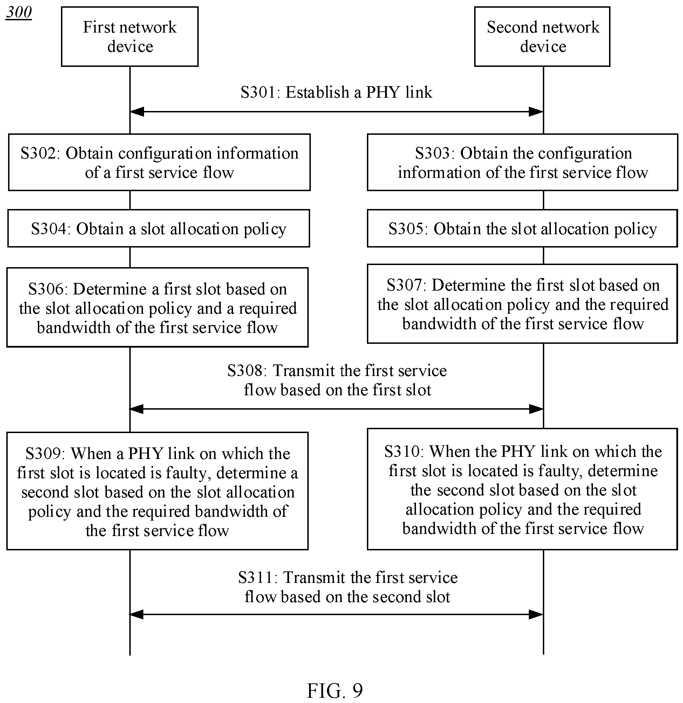

FIG. 9 is a flowchart of the FlexE-based service flow transmission method 300 according to an embodiment of this application. The method 300 includes the following S301 to S311.

The method 300 is described by using an example in which a transmission direction of a service flow is from a first network device to a second network device. In other words, the first network device is an upstream network element, and the second network device is a downstream network element. It should be understood that a service flow transmission procedure from the first network device to the second network device and a service flow transmission procedure from the second network device to the first network device have a consistent principle. If the transmission direction of the service flow is replaced with a direction from the second network device to the first network device, the service flow may also be transmitted by using the method 300. Details are not described herein.

Optionally, the first network device is the network device 101 in the system architecture 100, and the second network device is the network device 102 in the system architecture 100.

Optionally, the first network device and the second network device each have the logical function architecture shown in the system architecture 200. The first network device and the second network device each perform the method 300 by using the functional modules included in the system architecture 200. For example, data such as a slot allocation policy and a required bandwidth in the method 300 is received, saved, and maintained by using the user configuration layer 201, steps (such as S306, S307, S309, and S310) related to slot allocation in the method 300 are performed by using the resource management layer 202, and a step of transmitting the service flow in the method 300 is performed by using the shim layer 203 and the FlexE physical interface 204.

Optionally, the method 300 is processed by a general-purpose central processing unit (central processing unit, CPU). Alternatively, the method 300 may be jointly processed by a CPU and an NP. For example, the CPU performs processing actions corresponding to S302 to S307, S309, and S310, and the NP performs processing actions corresponding to S308 and S311. Certainly, the NP may not be used, but another processor suitable for packet forwarding may be used to perform the processing actions corresponding to S308 and S311. This is not limited in this application.

It should be understood that the method 300 focuses on how to allocate a slot. For technical details about how to transmit the service flow, refer to the foregoing descriptions of FIG. 1 to FIG. 3.

S301: The first network device and the second network device establish a PHY link.

The first network device and the second network device may create a FlexE group, and the FlexE group includes a plurality of PHY links between the first network device and the second network device. The FlexE group may be created based on a plan of a user. The FlexE group is for transmitting the service flow. The FlexE group may be understood as a large channel, and the channel includes one or more physical interfaces that are of the first network device and the second network device and that have a bonding capability. For example, with reference to the system architecture 100 shown in FIG. 6, the network device 101 and the network device 102 establish a FlexE group whose bandwidth is 100G and whose group identifier is a GRP 1, and add two physical interfaces whose bandwidth is 50G to the FlexE group.

The first network device and the second network device may create the FlexE group in a plurality of implementations. In a possible implementation, the user performs a configuration operation on the first network device and the second network device based on an interconnection parameter of the FlexE group, to complete configuration of the FlexE group. Attributes of the FlexE group include a configured bandwidth of the FlexE group and an available bandwidth of the FlexE group. The configured bandwidth of the FlexE group is a bandwidth planned by the user for the FlexE group. The configured bandwidth of the FlexE group is a total bandwidth of the physical interface bonded to the FlexE group. The available bandwidth of the FlexE group is a total bandwidth of a physical interface that is currently in an active state in the FlexE group. The active state is also referred to as a link (link) state, and the active state is a concept relative to an inactive state. If a part of physical interfaces in the FlexE group are in a non-link state, a bandwidth resource corresponding to the physical interface in the non-link state is unavailable, and the physical interface is in the inactive state.

In some embodiments, a procedure of configuring the FlexE group includes the following step A and step B.

Step A: The user separately performs a FlexE group creation operation on the first network device and the second network device. The user specifies a group identifier of the FlexE group, and separately inputs the group identifier on the first network device and the second network device. In response to the operation of the user, the first network device and the second network device create the FlexE group, and configure the group identifier of the FlexE group as a group identifier specified by the user.

Step B: The user specifies another parameter required for FlexE group interconnection, for example, a physical interface number of the PHY link, and separately inputs the specified parameter on the first network device and the second network device. The first network device and the second network device add the FlexE physical interface based on the FlexE group created in the step A, and configure the specified parameter.

S302: The first network device obtains configuration information of a first service flow.

The configuration information of the first service flow includes at least one of a required bandwidth of the first service flow or a priority of the first service flow. Optionally, the configuration information of the first service flow is obtained through a configuration operation of the user. In other words, the required bandwidth of the first service flow and the priority of the first service flow are specified by the user.

S303: The second network device obtains the configuration information of the first service flow.

The configuration information of the first service flow that is obtained by the second network device is the same as the configuration information of the first service flow that is obtained by the first network device. In other words, the configuration information of the first service flow is consistent at an RX end and a TX end.

It should be understood that a time sequence of S302 and S303 is not limited in this embodiment. In some embodiments, S302 and S303 may be sequentially performed. For example, S302 may be first performed, and then S303 is performed. Alternatively, S303 may be first performed, and then S302 is performed. In some other embodiments, S302 and S303 may alternatively be performed concurrently. In other words, S302 and S303 may be performed at the same time.

S304: The first network device obtains a slot allocation policy.

In this embodiment, several policies are defined for a slot allocation scenario in which the PHY link is normal and a slot allocation scenario in which the PHY link is faulty. Such policies are referred to as slot allocation policies herein. One or more service flows may be transmitted between the first network device and the second network device. In the following embodiment, a procedure of implementing a first slot allocation policy is described by using an example in which the first service flow is transmitted.

The slot allocation policy is for allocating a slot based on the required bandwidth of the first service flow. Triggered by various scenarios such as service flow addition or deletion, a PHY link fault, required bandwidth update, PHY link addition or deletion, the first network device or the second network device autonomously allocates the slot for the first service flow based on the slot allocation policy. Because the slot allocation policy is provided, the user only needs to configure the bandwidth, and does not need to understand FlexE protocol implementation details and does not need to carefully plan slots and sub-slots. Therefore, configuration complexity is greatly reduced.

The required bandwidth is a bandwidth that needs to be met for transmitting the first service flow. Optionally, the required bandwidth is a bandwidth specified by the user for the first service flow, and the required bandwidth is also referred to as a configured bandwidth. For example, the first service flow is a client 1, and a terminal sends a bandwidth request to the first network device, where the bandwidth request is for applying to allocate a required bandwidth to the client 1, the bandwidth request carries a BW 1, and the BW 1 is the required bandwidth corresponding to the client 1. The first network device obtains the BW 1 from the bandwidth request, to determine that the client 1 requires a required bandwidth with a size of the BW 1.

It should be understood that a time sequence of S302 and S304 is not limited in this embodiment. In some embodiments, S302 and S304 may be sequentially performed. For example, S302 may be first performed, and then S304 is performed. Alternatively, S304 may be first performed, and then S302 is performed. In some other embodiments, S302 and S304 may alternatively be performed concurrently. In other words, S302 and S304 may be performed at the same time.

S305: The second network device obtains the slot allocation policy.

The slot allocation policy obtained by the second network device is the same as the slot allocation policy obtained by the first network device. In this manner, because the RX end (the second network device) and the TX end (the first network device) have the consistent slot allocation policy, the RX end and the TX end determine the same slot for the service flow based on the same slot allocation policy and the same required bandwidth. Because the RX end and the TX end determine the same slot, communication overheads caused by slot negotiation between the two ends are avoided, and a delay of transmitting the service flow is reduced.

There are a plurality of implementations of ensuring policy consistency between the RX end and the TX end. The following provides descriptions by using an implementation (1) and an implementation (2) as examples.

Implementation (1): The TX end pushes the slot allocation policy to the RX end.

After obtaining the slot allocation policy, the first network device (the TX end) sends the slot allocation policy to the second network device (the RX end), and the second network device may receive the slot allocation policy from the first network device.

Effects of the implementation (1) include: The slot allocation policy is obtained in a push manner. In an aspect, the policy consistency between the RX end and the TX end is ensured. Therefore, it is ensured that in various slot migration scenarios such as the PHY link fault, the PHY link addition or deletion, and the required bandwidth update, because the RX end and the TX end use the consistent slot allocation policy, slots redeployed by the RX end and the TX end are consistent, and this is conducive to quick traffic recovery. In another aspect, a procedure in which the user configures the slot allocation policy for the RX end is avoided, so that the configuration complexity is reduced, and efficiency of deploying the slot allocation policy is improved.

There are a plurality of cases for frequencies at which the slot allocation policy is pushed. Optionally, the first network device pushes the slot allocation policy to the second network device once at an interval of one time periodicity. In this way, the TX end pushes the slot allocation policy to the RX end at scheduled time. Certainly, the first network device may alternatively push the slot allocation policy in real time, or push the slot allocation policy when the first network device is triggered by an instruction.

There are a plurality of implementations of pushing the slot allocation policy. Optionally, a procedure of pushing the slot allocation policy is performed in a negotiation manner. Specifically, the first network device generates a negotiation request, and sends the negotiation request to the second network device. The second network device receives the negotiation request from the first network device, and determines the slot allocation policy based on the negotiation request. The negotiation request indicates the slot allocation policy. For example, the negotiation request includes an identifier of the slot allocation policy.

There are a plurality of implementations of negotiating the slot allocation policy. Optionally, the second network device negotiates the slot allocation policy with the first network device based on the LLDP protocol. Correspondingly, the negotiation request is an LLDP frame.

There are a plurality of implementations of negotiating the slot allocation policy by using the LLDP. In a possible implementation, a structure of the LLDP frame is extended, so that the LLDP frame includes a policy field, and a value of the policy field indicates the slot allocation policy used for transmitting the first service flow. For example, if the value of the policy field is 0, it indicates that a slot allocation policy that is based on the required bandwidth is used for transmitting the first service flow. If the value of the policy field is 1, it indicates that a slot allocation policy that is based on an active bandwidth is used for transmitting the first service flow. If the value of the policy field is 2, it indicates that a slot allocation policy that is based on preemption using the priority is used for transmitting the first service flow. In this manner, the first network device pushes the used slot allocation policy to the second network device in an LLDP negotiation manner.

There are a plurality of implementations of carrying the policy field in the LLDP frame. In a possible implementation, the policy field is carried by using a type-length-value (Type-Length-Value, TLV) of the LLDP frame. For example, the TLV carrying the policy field is referred to as a policy TLV. The LLDP frame includes the policy TLV, and a value of the policy TLV includes the policy field.

There are a plurality of specific cases for the policy TLV. Optionally, the policy TLV is a new top (top) TLV, and a value of a type (type) field of the policy TLV indicates a type of the unused top TLV. Optionally, the policy TLV is a new sub-TLV of a top TLV, and a value of a type field of the policy TLV indicates a type of the unused sub-TLV Optionally, the policy TLV is a new sub-sub-TLV (sub-sub-TLV) of a top TLV, and a value of a type field of the policy TLV indicates a type of the unused sub-sub-TLV Whether the policy TLV is the top TLV, the sub-TLV, or the sub-sub-TLV is not limited in this embodiment.

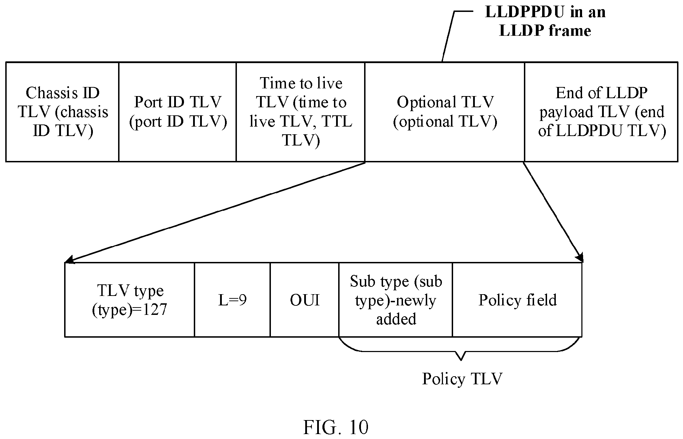

Optionally, the policy TLV is a sub-TLV of a TLV with T=127. For example, with reference to FIG. 10, an LLDP payload (an LLDPDU) in the LLDP frame includes a chassis ID TLV (Chassis ID TLV), a port ID TLV (Port ID TLV), a time to live TLV (Time to Live TLV, TTL TLV), an optional TLV (Optional TLV), and an end of LLDP payload TLV (End of LLDPDU TLV). The optional TLV includes the TLV with T=127, and the sub-TLV of the TLV with T=127 includes the policy TLV.

The TLV with T=127 is a TLV whose TLV type field includes 127. The TLV with T=127 is a TLV reserved by a vendor. A TLV length field of the TLV with T=127 may include 9. The TLV with T=127 may include an ID (Organizationally unique identifier, OUI) of an organization. The policy TLV includes a sub type (sub Type) field and the policy field. A value of the sub type field is a newly added value, and indicates the policy TLV. In this implementation, the slot allocation policy is specified by extending a sub-TLV.

The chassis ID TLV indicates a chassis ID (chassis ID) of an LLDPDU sender, and the port ID TLV is for identifying a port of a device that sends the LLDPDU. The time to live TLV is for notifying a receive end of a validity period of received information. The end of LLDPDU TLV is for identifying an end of the LLDPDU.

Optionally, a procedure of negotiating the slot allocation policy is performed by the resource management layer. For example, with reference to FIG. 8, the first network device corresponds to the TX policy module 2021 in the resource management layer 202, and the second network device corresponds to the RX policy module 2022 in the resource management layer 202. The TX policy module 2021 at the TX end pushes the slot allocation policy to the RX end based on the LLDP protocol. The RX policy module 2022 at the RX end receives, based on the LLDP protocol, the slot allocation policy pushed by the TX end, and saves the slot allocation policy.

Implementation (2): The consistent slot allocation policy is statically configured at the TX end and the RX end.

Optionally, the user triggers a configuration operation on the second network device, and the second network device determines the slot allocation policy based on the configuration operation of the user.

It should be understood that when S304 and S305 are implemented in a static configuration manner, a time sequence of S304 and S305 is not limited in this embodiment. In some embodiments, S304 and S305 may be sequentially performed. For example, S304 may be first performed, and then S305 is performed. Alternatively, S305 may be first performed, and then S304 is performed. In some other embodiments, S304 and S305 may alternatively be performed concurrently. In other words, S304 and S305 may be performed at the same time.

It should be understood that a time sequence of S303 and S305 is not limited in this embodiment. In some embodiments, S303 and S305 may be sequentially performed. For example, S303 may be first performed, and then S305 is performed. Alternatively, S305 may be first performed, and then S303 is performed. In some other embodiments, S303 and S305 may alternatively be performed concurrently. In other words, S303 and S305 may be performed at the same time.

S306: The first network device determines a first slot based on the slot allocation policy and the required bandwidth.

The first network device and the second network device determine the slot for the first service flow based on the created FlexE group and the slot allocation policy obtained in S304, and allocate the determined slot to the first service flow. For example, with reference to FIG. 8, the resource management layer 202 saves the priority of the first service flow, a bandwidth requirement of the first service flow, a slot resource pool, and a bandwidth allocation policy customized by the user. The foregoing information is used as input data of S306. The resource management layer 202 performs, based on the input data, a step of allocating the slot, and the resource management layer 202 outputs the slot corresponding to the service flow.

In this manner, a solution in which the user specifies the slot based on an instruction is improved to a solution in which the user specifies the bandwidth requirement and the network device manages slots based on the slot allocation policy customized by the user and the required bandwidth, so that a slot allocation function is transferred from the user to the network device. Therefore, a complex operation of configuring the slot by the user in a related technology is avoided, and configuration performed by the user is simplified. In addition, in many scenarios, the network device may reallocate a slot based on the slot allocation policy, so that the service flow is migrated from an original slot to the reallocated slot. Therefore, the network device has a dynamic slot migration capability.

In the method 300, an example in which the slot determined for the first service flow in S306 is referred to as the first slot is used for description. The first slot is a slot of a PHY link between the first network device and the second network device.

Optionally, the first slot is one slot, or the first slot is a set including a plurality of slots. A quantity of slots included in the first slot is not limited in this embodiment. For example, with reference to FIG. 6, the network device 101 determines a TS 1 of a PHY 1 for a client 1, and the network device 101 determines a TS 2 to a TS 9 of the PHY 1 for a client 3. In this example, if the first service flow is the client 1, the first slot is the TS 1 of the PHY 1. If the first service flow is the client 3, the first slot is the TS 2 to the TS 9 of the PHY 1.

Optionally, the first slot is a slot on a same PHY link. For example, with reference to FIG. 6, the first slot is a slot on the PHY 1, or the first slot is a slot on a PHY 2. Alternatively, the first slot includes slots separately located on a plurality of PHY links. For example, with reference to FIG. 6, the first slot includes a slot on the PHY 1 and a slot on the PHY 2. For example, the first slot includes the TS 1 on the PHY 1 and a TS 2 on the PHY 2.

Optionally, when the first slot includes the slots on the plurality of PHY links, in the first slot, a quantity of slots distributed on each of the plurality of PHY links is the same. For example, with reference to FIG. 6, the first slot includes N slots on the PHY 1 and N slots on the PHY 2, where N is a positive integer. Alternatively, in the first slot, a quantity of slots distributed on each of the plurality of PHY links is different. For example, with reference to FIG. 6, the first slot includes p slots on the PHY 1 and q slots on the PHY 2, where p and q are positive integers. In addition, in the first slot, whether a slot distributed on each of the plurality of PHY links is the same or approximately the same may be determined based on the used slot allocation policy. For example, when a slot allocation policy that is based on service flow load sharing in the following optional manner 6 is used, in the first slot, the slot distributed on each of the plurality of PHY links is the same or approximately the same.

There are a plurality of implementations of determining the first slot based on the slot allocation policy and the required bandwidth. The following provides descriptions by using an optional manner 1 to the optional manner 6 as examples.

Optional manner 1: The slot allocation policy that is based on the configured bandwidth of the service flow.

If an idle slot meets the required bandwidth, the first network device determines, in the idle slot of the FlexE group based on the slot allocation policy and the required bandwidth, the first slot that meets the required bandwidth. An identifier of the slot allocation policy in the optional manner 1 may be 000.

There are a plurality of manners of determining that the idle slot meets the required bandwidth. In a possible implementation, the first network device obtains the available bandwidth of the FlexE group based on a quantity of idle slots in the FlexE group and a bandwidth corresponding to one slot. The first network device determines whether the available bandwidth of the FlexE group is greater than or equal to the required bandwidth. If the available bandwidth of the FlexE group is greater than or equal to the required bandwidth, the first network device determines that the idle slot meets the required bandwidth. The available bandwidth of the FlexE group is a product of the quantity of idle slots and the bandwidth corresponding to one slot. For example, the bandwidth corresponding to one slot is 5G, and the FlexE group currently has three idle slots, so that the available bandwidth of the FlexE group is 5G^{∗}3=15G. If the required bandwidth of the service flow is 10G, the first network device determines that the available bandwidth of 15G of the FlexE group is greater than the required bandwidth of 10G. In this case, the first network device determines two idle slots in the three idle slots based on the slot allocation policy and the required bandwidth of 10G, and the two determined idle slots are the first slot.

This paragraph describes effects achieved by the optional manner 1. The slot that meets the required bandwidth is automatically determined by using the slot allocation policy, and the slot that meets the required bandwidth is allocated to the service flow. Therefore, in a process of transmitting the service flow, the service flow is transmitted by using the slot that meets the required bandwidth, so that a bandwidth of the service flow is ensured. Because the bandwidth of the service flow is ensured, a requirement for ensuring an SLA of a service is met. Especially, when the required bandwidth is specified by the user, slot allocation performed in the optional manner 1 enables the bandwidth of the service flow to meet an expectation of the user for the bandwidth.

Optional manner 2: The slot allocation policy that is based on the active bandwidth of the service flow.

Both the required bandwidth and the active bandwidth are considered for the slot allocation policy. Specifically, the first network device determines whether an idle slot of the FlexE group meets the required bandwidth. If the idle slot does not meet the required bandwidth, the first network device determines, in the idle slot based on the slot allocation policy and the active bandwidth, the first slot that meets the active bandwidth. An identifier of the slot allocation policy in the optional manner 2 may be 001.

The active bandwidth is a minimum required bandwidth on which the first network device can start transmission of the first service flow. When the slot allocated to the service flow meets the active bandwidth, a physical interface (for example, a FlexE physical interface) of the first network device can be in an up state, and start the transmission of the service flow. The active bandwidth is less than the required bandwidth. For example, a required bandwidth of a client 1 is 10G, an active bandwidth is 5G, and a bandwidth corresponding to one slot is 5G. If a FlexE group currently has only one idle slot, an available bandwidth of the FlexE group is 5G^{∗}1=5G, and the available bandwidth of the FlexE group is insufficient to meet the required bandwidth of 10G. In this case, the first network device determines the idle slot based on the slot allocation policy, to start transmission of the client 1 by using the active bandwidth of 5G. In this example, the determined idle slot is the first slot.

This paragraph describes effects achieved by the optional manner 2. When idle slots are insufficient, the network device may fail to find an idle slot that meets the required bandwidth. However, the slot that meets the active bandwidth is automatically determined by using the slot allocation policy, and the slot that meets the active bandwidth is allocated to the service flow. Therefore, even if the idle slots are insufficient, the network device can start the transmission of the service flow by using the slot corresponding to the active bandwidth. In this way, connectivity of the service flow is ensured, the service flow can be transmitted, and disconnection of the service flow is avoided, so that transmission of as many service flows as possible can be started.

Optional manner 3: The slot allocation policy that is based on preemption using the priority of the service flow.

Both the required bandwidth and the priority of the service flow are considered for the slot allocation policy. Specifically, that the first service flow is a high-priority service flow is used as an example, and the first network device determines whether an idle slot of the FlexE group meets the required bandwidth. If the idle slot does not meet the required bandwidth, the first network device determines, based on the slot allocation policy and the priority of the first service flow, the first slot in a slot occupied by a second service flow. An identifier of the slot allocation policy in the optional manner 3 may be 002. A priority of the second service flow is lower than the priority of the first service flow. For the first service flow and the second service flow, the first service flow is a high-priority service flow, and the second service flow is a low-priority service flow.

There are a plurality of implementations of determining a priority of a service flow. The following uses a manner A and a manner B as examples for description.

Manner A: The user specifies the priority of the service flow.

Specifically, when performing the configuration operation for the first service flow, the user inputs the priority of the first service flow. Correspondingly, the configuration information of the first service flow that is obtained by performing S302 includes the priority of the first service flow, and the first network device obtains the priority of the first service flow from the configuration information of the first service flow.

Manner B: The priority of the service flow is determined based on an ID of the service flow.

The first network device obtains the priority of the first service flow based on an ID of the first service flow. Optionally, the priority of the service flow is negatively correlated to the ID of the service flow, that is, a smaller ID of the service flow indicates a higher priority of the service flow. For example, if the ID of the first service flow is less than an ID of the second service flow, the priority of the first service flow is higher than the priority of the second service flow.

There are a plurality of cases of choosing to use the manner A or the manner B. For example, the first network device determines whether the configuration information of the first service flow includes the priority of the first service flow. If the configuration information of the first service flow includes the priority of the first service flow, the first network device chooses to use the manner A. If the configuration information of the first service flow does not include the priority of the first service flow, the first network device chooses to use the manner B.

This paragraph describes effects achieved by the optional manner 3. When idle slots are insufficient, a resource contention relationship exists between different service flows, and a resource contended by the service flows is the idle slot. A slot originally occupied by a low-priority service flow is automatically allocated to a high-priority service flow by using the slot allocation policy. Therefore, even if the idle slots are insufficient, the high-priority service flow can preempt the slot of the low-priority service flow, and the high-priority service flow may be transmitted by using the slot originally occupied by the low-priority service flow, so that a bandwidth of the high-priority service flow is ensured or connectivity of the high-priority service flow is ensured.

Optional manner 4: A slot allocation policy that is based on sequences.

The required bandwidth, a sequence of physical interface numbers, and a sequence of slot numbers are all considered for the slot allocation policy. In different PHY links in the FlexE group, a PHY link with a smaller physical interface number has a higher resource allocation priority. In different slots of the PHY link, a slot with a smaller slot number has a higher resource allocation priority. Specifically, the first network device determines, based on the slot allocation policy, a first PHY link with a smallest physical interface number in an available PHY link of the FlexE group. The first network device determines, based on the required bandwidth, the first slot with a smallest slot number in an idle slot of the first PHY link.

The first PHY link is an available PHY link with the smallest physical interface number in the available PHY link of the FlexE group. For example, if there are a total of three PHY links in the FlexE group, and the three PHY links are separately a PHY 1, a PHY 2, and a PHY 3, where the PHY 1 is currently unavailable, and the PHY 2 and the PHY 3 are currently available, the first PHY link is the PHY 2.

The first slot is an idle slot with the smallest slot number in the idle slot of the first PHY link. For example, the first PHY link includes 10 slots, and the 10 slots are separately a TS 1, a TS 2, and a TS 3 to a TS λ. The TS 1 and the TS 2 are unavailable, and the eight slots from the TS 3 to the TS λ are idle slots. In this case, the first slot is the TS 3.

Optionally, the first network device sequentially searches, starting from a slot corresponding to a slot number 0 in ascending order of slot numbers, for an idle slot on the PHY link with the smallest physical interface number in all available PHY links, until the idle slot is found. The found idle slot is the first slot.

This paragraph describes effects achieved by the optional manner 4. The slot with the smallest slot number on the available PHY link currently with the smallest physical interface number is automatically determined by using the slot allocation policy, so that a simple automatic slot allocation manner is provided, to facilitate management of an idle slot of the FlexE group.

Optional manner 5: A slot allocation policy that is based on PHY link load sharing.

Specifically, both the required bandwidth and load of the PHY link are considered for the slot allocation policy. Different PHY links in the FlexE group have equal or approximately equal load, so that load of the different PHY links in the FlexE group is balanced as much as possible.

In a possible implementation, in a process of allocating the slot for the first service flow, the first network device determines, based on the slot allocation policy, a second PHY link with smallest load in an available PHY link of the FlexE group. The first network device determines, based on the required bandwidth, the first slot with a smallest slot number in an idle slot of the second PHY link. The second PHY link is an available PHY link with the smallest load in the available PHY link of the FlexE group. For example, there are a total of two PHY links in the FlexE group, and the two PHY links are separately a PHY 1 and a PHY 2, where the PHY 1 and the PHY 2 are both available PHY links. If load of the PHY 1 is less than load of the PHY 2, the second PHY link is the PHY 1.

Optionally, load of a PHY link is determined based on a quantity of slots that are on the PHY link and that have carried a service flow. In the process of determining the second slot, for example, the first network device obtains a quantity of slots that are on each PHY link of the FlexE group and that have carried a service flow, and determines a PHY link with a smallest quantity of slots that have carried a service flow. The PHY link with the smallest quantity of slots that have carried a service flow is the second PHY link. In this optional manner, quantities of slots that are on different PHY links of the FlexE group and that carry a service flow are balanced as much as possible. For example, if there are a total of N PHY links in the FlexE group, m₁ slots on a PHY 1 carry a service flow, m₂ slots on a PHY 2 carry a service flow, ..., and m_{N} slots on a PHY N carry a service flow, after the optional manner 5 is used, m₁, m₂, and m_{N} are equal or approximately equal.

Optionally, load of a PHY link is determined based on a quantity of idle slots on the PHY link. In this manner, in the process of determining the second slot, for example, the first network device obtains a quantity of idle slots on each PHY link of the FlexE group, and determines a PHY link with a largest quantity of idle slots. The PHY link with the largest quantity of idle slots is the second PHY link.

This paragraph describes effects achieved by the optional manner 5. If slots on a same PHY link are allocated to all service flows, all the service flows are interrupted when the PHY link is faulty. However, in the optional manner 5, because load sharing is implemented based on PHY links, when a PHY link is faulty, a service flow transmitted on a PHY link other than the faulty PHY link is not affected, and can be normally transmitted. Therefore, a case in which all service flows are interrupted because a PHY link is faulty is avoided. For example, if the FlexE group includes two PHY links: a PHY 1 and a PHY 2, and 2N service flows need to be transmitted, in the optional manner 5, N service flows are transmitted on the PHY 1, and the other N service flows are transmitted on the PHY 2. In this case, even if the PHY 1 is faulty and a dynamic slot migration function corresponding to S309 is not performed, the N service flows on the PHY 2 can be normally transmitted, so that 50% of the service flows can still be quickly recovered without manual intervention. In addition, when the load of the PHY link is not considered, all the service flows may be centrally distributed on one or more PHY links. As a result, some PHY links are full-loaded, and some PHY links are empty-loaded. However, in the optional manner 5, all the service flows can be evenly shared by different PHY links, so that pressure of a single PHY link is reduced, and a load sharing function is implemented.

Optional manner 6: The slot allocation policy that is based on service flow load sharing.

For the slot allocation policy that is based on service flow load sharing, the required bandwidth is considered, and how to share required bandwidth of a same service flow to as many PHY links as possible to transmit the service flow by using as many PHY links as possible is also considered.

In a possible implementation, the first network device determines the first slot in idle slots of a plurality of PHY links based on the slot allocation policy and the required bandwidth. The first slot is evenly distributed on different PHY links in the plurality of PHY links. Specifically, the first slot includes a plurality of slots, the plurality of slots are separately located on a plurality of PHY links, quantities of slots determined on different PHY links are equal or approximately equal, and the plurality of PHY links jointly carry the first service flow in a load sharing manner. For example, if there are currently four or more available PHY links, the first network device determines one slot on each of the four available PHY links. The four determined slots are the first slot, and the four determined slots are evenly distributed on the four available PHY links, so that the service flow is shared by the four PHY links. If there are currently two available PHY links, the first network device determines two slots on each of the two available PHY links. The four determined slots are the first slot. In this way, a same service flow is transmitted on different PHY links as much as possible.

In a possible implementation, the first network device obtains, based on the required bandwidth of the service flow and a quantity of available PHY links in the FlexE group, a bandwidth that needs to be allocated to each available PHY link, and the first network device determines a slot on each available PHY link based on the bandwidth that needs to be allocated to each available PHY link, to determine the first slot. The bandwidth that needs to be allocated to each available PHY link is, for example, a ratio of the required bandwidth to the quantity of available PHY links. For example, a required bandwidth of a client 1 is 40G, available PHY links in a FlexE group are a PHY 1, a PHY 2, a PHY 3, and a PHY 4, and a bandwidth corresponding to one slot is 5G. The first network device determines, based on the required bandwidth of 40G and the four available PHY links, that a bandwidth of 40G/4=10G needs to be shared by each PHY link, and determines 10G/2=2 slots on each PHY link. In this case, the first network device determines two slots on the PHY 1, two slots on the PHY 2, two slots on the PHY 3, and two slots on the PHY 4. The eight determined slots distributed on the four PHY links are the first slot.

This paragraph describes effects achieved by the optional manner 6. A required bandwidth of a same service flow is evenly shared by as many available PHY links as possible. In an aspect, impact on the service flow that is caused by a fault of a single PHY link can be greatly reduced. Even if a slot migration step is not performed, because the service flow can be transmitted by using a slot on another PHY link, an available bandwidth of the service flow is ensured, and transmission is not interrupted. For example, in the optional manner 6, the required bandwidth of the first service flow may be evenly shared by N PHY links, and each PHY link occupies a slot corresponding to 1/N of the required bandwidth. In this case, even if a PHY link in the N PHY links is faulty, the remaining (N-1) PHY links are still used to transmit the first service flow, so that it is ensured that (N-1)/N of the required bandwidth are available for the first service flow, and therefore quick fault recovery can be implemented without manual intervention. In another aspect, pressure of a single PHY link is reduced, and a load sharing function is implemented.

Optionally, a specific type of the slot allocation policy is customized by the user. In other words, an optional manner in the foregoing optional manner 1 to optional manner 6 that is used by the network device to allocate the slot is customized by the user. For example, the foregoing optional manner 1 to optional manner 6 are mapped to a plurality of options, and each option corresponds to one or more optional manners. For example, the foregoing optional manner 4 is mapped to a "sequential allocation" option, the foregoing optional manner 5 is mapped to a "PHY link load sharing-based" option, and the foregoing optional manner 6 is mapped to a "service flow load sharing-based" option. The options to which the foregoing optional manner 1 to optional manner 6 are mapped are presented to the user by using an interface. When the user expects the network device to allocate the slot in a specific optional manner, the user triggers a selection operation for an option corresponding to the expected optional manner, and the first network device allocates the slot in the optional manner corresponding to the option. In this manner, various selectable slot allocation policies of specific types are provided for the user, and the first network device allocates the slot based on the slot allocation policy customized by the user, so that a customization requirement of the user is met.

It should be understood that the foregoing optional manner 1 to optional manner 6 may be combined in any manner. For example, only one of the six optional manners may be performed, or two or more of the six optional manners may be performed. If different optional manners are combined, a logical relationship between the different optional manners may be an AND relationship, or may be an OR relationship. The following describes how to combine different optional manners by using examples.

For example, the optional manner 1 and the optional manner 3 are combined. If the idle slot does not meet the required bandwidth, the first network device determines, in the slot occupied by the second service flow based on the slot allocation policy and the priority of the first service flow, the first slot that meets the required bandwidth.

For example, the optional manner 2 and the optional manner 3 are combined. If the idle slot does not meet the required bandwidth, the first network device determines, in the slot occupied by the second service flow based on the slot allocation policy and the priority of the first service flow, the first slot that meets the active bandwidth.

For example, the optional manner 1 and the optional manner 4 are combined. If the idle slot meets the required bandwidth, the first network device determines, based on the slot allocation policy, the first PHY link with the smallest physical interface number in the available PHY link of the FlexE group. The first network device determines, based on the required bandwidth in ascending order of slot numbers, a slot in the idle slot of the first PHY link, until the determined slot meets the required bandwidth.

For example, the optional manner 2 and the optional manner 4 are combined. If the idle slot does not meet the active bandwidth, the first network device determines, based on the slot allocation policy, the first PHY link with the smallest physical interface number in the available PHY link of the FlexE group. The first network device determines, based on the active bandwidth in ascending order of slot numbers, a slot in the idle slot of the first PHY link, until the determined slot meets the active bandwidth.

It should be further understood that the foregoing optional manner 1 to optional manner 6 are merely example descriptions, and do not represent mandatory implementations of allocating the slot based on the slot allocation policy and the required bandwidth. In some other embodiments, other implementations may be used to implement a function of allocating the slot based on the slot allocation policy and the required bandwidth. These implementations, as specific cases covered by S306, should also fall within the protection scope of embodiments of this application.

S307: The second network device determines the first slot based on the slot allocation policy and the required bandwidth.

The slot determined by the second network device based on the slot allocation policy and the required bandwidth is the same as the slot determined by the first network device based on the slot allocation policy and the required bandwidth, and the slots each are the first slot. In addition, when the slot allocation policy is subdivided into the optional manner 1 to the optional manner 6, an optional manner used by the second network device is the same as an optional manner used by the first network device. Specifically, S307 also includes the following optional manner 1 to optional manner 6. For technical details of S307, refer to S306.

Optional manner 1: If the idle slot meets the required bandwidth, the second network device determines, in the idle slot based on the slot allocation policy and the required bandwidth, the first slot that meets the required bandwidth.

Optional manner 2: If the idle slot does not meet the required bandwidth, the second network device determines, in the idle slot based on the slot allocation policy and the active bandwidth, the first slot that meets the active bandwidth.

Optional manner 3: If the idle slot does not meet the required bandwidth, the second network device determines, based on the slot allocation policy and the priority of the first service flow, the first slot in the slot occupied by the second service flow, where the priority of the second service flow is lower than the priority of the first service flow.

Optional manner 4: The second network device determines, based on the slot allocation policy, the first PHY link with the smallest physical interface number in the available PHY link of the FlexE group. The second network device determines, based on the required bandwidth, the first slot with the smallest slot number in the idle slot of the first PHY link.

Optional manner 5: The second network device determines, based on the slot allocation policy, the second PHY link with the smallest load in the available PHY link of the FlexE group. The second network device determines, based on the required bandwidth, the first slot with the smallest slot number in the idle slot of the second PHY link.

Optional manner 6: The second network device determines the first slot in the idle slots of the plurality of PHY links based on the slot allocation policy and the required bandwidth, where the first slot is evenly distributed on the different PHY links in the plurality of PHY links.

S308: The first network device and the second network device transmit the first service flow based on the first slot.

S308 includes the following S308A and S308B.

S308A: The first network device sends the first service flow to the second network device based on the first slot.

S308B: The second network device receives the first service flow from the first network device based on the first slot.

For example, the first service flow is a client 1, and the first slot is a TS 2 on a PHY 1 and a TS 1 on a PHY 2. A process of transmitting the first service flow based on the first slot includes: The TX end (the first network device) first performs service processing on the client 1. For example, a traffic management (traffic management, TM) module of the first network device first performs quality of service (quality of service, QoS) control on the client 1, then a MAC layer module of the first network device performs physical layer information encapsulation, and service data obtained after processing is sent to a shim of the first network device. Then, the shim of the first network device may perform slicing and slot encapsulation on the received service data, to be specific, encapsulate the service data into the TS 2 on the PHY 1 and the TS 1 on the PHY 2. Then, the PHY 1 and the PHY 2 in the FlexE group may be used to transmit the service data of the client 1 to the second network device through an optical module connected to the RX end (the second network device). The second network device reassembles, into the client 1 according to a reverse process of a processing process of the first network device, the service data of the client 1 that is transmitted on the PHY 1 and the PHY 2.

S309: When a PHY link on which the first slot is located is faulty, the first network device determines a second slot based on the slot allocation policy and the required bandwidth of the first service flow.

If the PHY link on which the first slot is located is faulty, the originally allocated first slot on the PHY link is unavailable. In response to a status change of the PHY link, the first network device redetermines a new slot based on the original slot allocation policy and the required bandwidth of the first service flow, and allocates the redetermined slot to the first service flow, to send the first service flow by using the redetermined slot. For example, with reference to FIG. 8, the resource management layer 202 maintains the slot allocation policy customized by the user, the priority of the service flow, an available physical interface (that is, a physical interface in the active state) of the FlexE group, and a TX slot resource pool of the available physical interface of the FlexE group, and re-arranges available slots in a TX direction on the FlexE group based on the slot allocation policy.

The first network device may determine that the PHY link on which the first slot is located is faulty. There are a plurality of implementations of determining that the PHY link is faulty. Optionally, the first network device actively detects that the PHY link is faulty. For example, the first network device detects a status of a physical interface, and if the physical interface is in a down (down) state, the first network device determines that the PHY link is faulty.

Optionally, when the PHY link on which the first slot is located is faulty, the first network device first removes the faulty PHY link from the FlexE group, and then reallocates the slot based on the slot allocation policy and a FlexE group obtained after the PHY link is removed. Specifically, for example, FlexE groups before and after the PHY link is removed are separately referred to as a first FlexE group and a second FlexE group. The first network device and the second network device originally transmit the service flow by using the first FlexE group. When the PHY link on which the first slot is located is faulty, the first network device deletes, from the first FlexE group, the PHY link on which the first slot is located, to obtain the second FlexE group. The second FlexE group does not include the PHY link on which the first slot is located. In S309, the first network device determines the second slot in the second FlexE group based on the slot allocation policy and the required bandwidth of the first service flow.

This paragraph describes effects achieved by removing the faulty PHY link. As specified in the protocol, when the FlexE group is in an available state, all PHY links in the FlexE group are required to be in an active state. However, in the related technology, after a PHY link is faulty, the faulty PHY link is in an inactive state. As a result, an entire FlexE group to which the PHY link belongs is unavailable. However, in this embodiment, after the PHY link is faulty, a procedure of deleting the faulty PHY link from the FlexE group is quickly started, so that the faulty PHY link is automatically removed from the FlexE group, and a remaining PHY link in the FlexE group is in the active state. Therefore, it is ensured that the FlexE group is available, and a case in which the entire FlexE group is unavailable after the PHY link is faulty is avoided.

In this manner, when the PHY link on which the first service flow is located is faulty, the first network device can dynamically migrate, based on the slot allocation policy, the first service flow from the original slot to the redetermined slot, to redeploy the slot for the first service flow, so that slot rearrangement is implemented. In other words, the slot allocation policy is also used as a dynamic migration policy. For example, with reference to FIG. 8, in a PHY link fault scenario, the resource management layer 202 dynamically migrates the service of the user based on the slot allocation policy.

For distinction, in the method 300, the redetermined slot is referred to as the second slot. The second slot is different from the first slot. For example, the second slot and the first slot are located on different PHY links. Optionally, the second slot is one slot, or the second slot is a set including a plurality of slots. Optionally, the second slot is a slot on a same PHY link. Alternatively, the second slot includes slots separately located on a plurality of PHY links. Optionally, when the second slot includes the slots on the plurality of PHY links, in the second slot, a quantity of slots distributed on each of the plurality of PHY links is the same. Alternatively, in the second slot, a quantity of slots distributed on each of the plurality of PHY links is different. In addition, in the second slot, whether a slot distributed on each of the plurality of PHY links is the same or approximately the same may be determined based on the used slot allocation policy.

There are a plurality of implementations of determining the second slot based on the slot allocation policy and the required bandwidth. The following provides descriptions by using an optional manner 1 to an optional manner 6 as examples. It should be understood that the optional manner 1 to the optional manner 6 in S309 correspond to the optional manner 1 to the optional manner 6 in S306. For technical details of the optional manners in S309, refer to the corresponding optional manners in S306.

Optional manner 1: If an idle slot meets the required bandwidth, the first network device determines, in the idle slot based on the slot allocation policy and the required bandwidth, the second slot that meets the required bandwidth.

Effects achieved by performing the optional manner 1 when the PHY link is faulty include: The slot that meets the required bandwidth is redetermined, and the service flow is transmitted by using the redetermined slot. Therefore, after the service flow is migrated from the original slot to the redetermined slot, the bandwidth of the service flow can still meet the required bandwidth, so that normal working of as many service flows as possible is ensured. Because the bandwidth of the service flow continues to be ensured after the PHY link is faulty, the service-level agreement (Service-Level Agreement, SLA) of the service is ensured. Especially, when the required bandwidth is specified by the user, slot reallocation performed in the optional manner 1 enables the bandwidth of the service flow to meet the expectation of the user for the bandwidth after the PHY is faulty.

Optional manner 2: If an idle slot does not meet the required bandwidth, the first network device determines, in the idle slot based on the slot allocation policy and the active bandwidth, the second slot that meets the active bandwidth.

Effects achieved by performing the optional manner 2 when the PHY link is faulty include: When the PHY link is faulty and idle slots are insufficient, the slot that meets the active bandwidth is redetermined, and the service flow is transmitted by using the determined slot. Therefore, the service flow can be in a connected state, the service flow can be transmitted to the peer end, and traffic interruption of the service flow after the PHY link is faulty is avoided, so that transmission of as many service flows as possible can still be started after the PHY link is faulty.

Optional manner 3: If an idle slot does not meet the required bandwidth, the first network device determines, based on the slot allocation policy and the priority of the first service flow, the second slot in a slot occupied by the second service flow.

Effects achieved by performing the optional manner 3 when the PHY link is faulty include: When the PHY link is faulty and idle slots are insufficient, slot reallocation is performed based on the priority of the service flow, and a slot originally occupied by a low-priority service flow is reallocated to a high-priority service flow. Therefore, the high-priority service flow has an opportunity to preferentially occupy the slot through contention, and the high-priority service flow can be transmitted by using the slot originally occupied by the low-priority service flow, so that disconnection of the high-priority service flow is avoided, and quick recovery of the high-priority service flow is ensured.

Optional manner 4: The first network device determines, based on the slot allocation policy, a first PHY link with a smallest physical interface number in an available PHY link of the FlexE group. The first network device determines, based on the required bandwidth, the second slot with a smallest slot number in an idle slot of the first PHY link.

The optional manner 4 may be combined with the optional manner 1 and the optional manner 3. To be specific, when the PHY link is faulty, in a slot migration process, the corresponding slot on the available PHY link is allocated according to sequences based on the priority of the service flow and the required bandwidth of the service flow.

The optional manner 4 may be combined with the optional manner 2 and the optional manner 3. To be specific, when the PHY link is faulty, in a slot migration process, the corresponding slot on the available PHY link is allocated according to sequences based on a size of the service flow and the active bandwidth of the service flow.

Optional manner 5: The first network device determines, based on the slot allocation policy, a second PHY link with smallest load in an available PHY link of the FlexE group. The first network device determines, based on the required bandwidth, the second slot with a smallest slot number in an idle slot of the second PHY link.

Optional manner 6: The first network device determines the second slot in idle slots of a plurality of PHY links based on the slot allocation policy and the required bandwidth, where the second slot is evenly distributed on different PHY links in the plurality of PHY links.

It should be understood that the slot allocation policy used when the PHY link is faulty and the slot allocation policy used when the PHY link is normal may be completely the same, or may be slightly different. In other words, the optional manner selected by the first network device from the optional manner 1 to the optional manner 6 in S306 may be the same as or different from an optional manner selected from the optional manner 1 and the optional manner 6 in S309. For example, the optional manner 1 is implemented in S306, and the optional manner 2 is implemented in S309. Similarly, the optional manner selected by the second network device from the optional manner 1 to the optional manner 6 in S307 may be the same as or different from an optional manner selected from an optional manner 1 and an optional manner 6 in S310. In some optional embodiments, it is ensured that the optional manner selected by the first network device in S306 is consistent with the optional manner selected by the second network device in S307, and it is ensured that the optional manner selected by the first network device in S309 is consistent with the optional manner selected by the second network device in S310. However, it is not limited that the optional manner selected by the first network device in S306 is consistent with the optional manner reselected by the first network device in S309, and it is not limited that the optional manner selected by the second network device in S307 is consistent with the optional manner reselected by the second network device in S310.

It should be understood that an obtaining manner of the slot allocation policy used when the PHY link is faulty and an obtaining manner of the slot allocation policy used when the PHY link is normal may be completely the same, or may be slightly different. For example, the slot allocation policy used when the PHY link is faulty is pushed by the TX end to the RX end, and the slot allocation policy used when the PHY link is normal is statically limited by the user.

Optionally, a specific slot allocation policy used when the PHY link is normal and a specific slot allocation policy used when the PHY link is faulty are customized by the user. In a possible implementation, the slot allocation policy used when the PHY link is normal is referred to as a bandwidth allocation policy, and the slot allocation policy used when the PHY link is faulty is referred to as a dynamic migration policy. The bandwidth allocation policy includes at least one of the optional manner 1 to the optional manner 6 in S306, and a specific optional manner used for the bandwidth allocation policy is determined by a configuration operation of the user. The dynamic migration policy includes at least one of the optional manner 1 to the optional manner 6 in S309, and a specific optional manner used for the dynamic migration policy is determined by a configuration operation of the user. In the foregoing optional manner 1 and optional manner 6, slot migration policy customization is provided for the user, so that the user can customize a migration policy. In cooperation with different migration policies, fast slot migration is performed according to an expectation of the user, and a FlexE dynamic slot migration capability is introduced, so that a FlexE operation and maintenance problem is resolved.

After determining the second slot, the first network device may forcibly refresh a current client calendar based on the second slot, and update a slot corresponding to the first service flow in the client calendar from the first slot to the second slot. "Forcibly refresh" refers to a refresh manner in which a negotiation procedure including a request and a response is not performed. The client calendar is used to store a mapping relationship between a service flow and a slot. In this embodiment, the first network device is the TX end of the service flow, and the client calendar of the first network device is also referred to as a TX current table.

S310: When the PHY link on which the first slot is located is faulty, the second network device determines the second slot based on the slot allocation policy and the required bandwidth of the first service flow.

After determining that the PHY link is faulty, the second network device also redetermines a new slot. In a process in which the second network device redetermines the slot, because the slot allocation policy used by the second network device is consistent with the slot allocation policy used by the first network device, and the required bandwidth used by the second network device is consistent with the required bandwidth used by the first network device, the new slot determined by the second network device is the same as the new slot determined by the first network device, and the slots each are the second slot. For example, with reference to FIG. 8, the RX policy module 2022 of the resource management layer maintains the slot migration policy pushed by a peer network element, the priority of the service flow, an available physical interface (that is, a physical interface in the active state) of the FlexE group, and an RX slot resource pool of the available physical interface of the FlexE group, and re-arranges available slots in an RX direction on the FlexE group based on the slot allocation policy.

When the PHY link is faulty, the slot is redetermined based on the slot allocation policy. Achieved effects include at least the following: In the related technology, when a PHY link is faulty, a TX end of a service flow and an RX end of the service flow need to first perform a negotiation procedure, and then switch a slot in which the service flow is located. The negotiation procedure is also referred to as a request-response solution. The negotiation procedure includes a process in which the TX end sends a negotiation request, a process in which the RX end receives the negotiation request and returns a negotiation response to the TX end, and a process in which the TX end receives the negotiation response. In the negotiation procedure, after negotiating a slot to which the service flow is to be migrated, the transmit end and the receive end switch the service flow to the negotiated slot. However, because the negotiation procedure needs to be performed after the PHY link is faulty, a high delay is caused, and switching time is hundreds of milliseconds. However, in the foregoing manner, after the PHY link is faulty, the receive end and the transmit end each redetermine the slot, and migrate the service flow to the redetermined slot. In an aspect, because the receive end and the transmit end do not need to perform the negotiation procedure, a delay caused by the negotiation procedure is avoided, traffic interruption time can be controlled within 50 milliseconds, and it is ensured that the service flow is quickly recovered within 50 milliseconds. Therefore, a fault recovery speed of the service is greatly improved. In another aspect, after the PHY link is faulty, the receive end and the transmit end redetermine slots based on the same slot allocation policy and the same required bandwidth. Therefore, the new slots determined by the receive end and the transmit end are the same, so that slot arrangements of the receive end and the transmit end are consistent after slot migration. In this case, the receive end and the transmit end can normally transmit the service flow based on the consistent slot arrangements, so that a protection switching function is implemented between different PHY links in the FlexE group, the service flow on the faulty PHY link is switched to a normal PHY link, and transmission interruption of the service flow is avoided.

Optionally, when the PHY link on which the first slot is located is faulty, the second network device removes the faulty PHY link from the FlexE group. Specifically, for example, the FlexE groups before and after the PHY link is removed are separately referred to as the first FlexE group and the second FlexE group. The second network device and the second network device originally transmit the service flow by using the first FlexE group. When the PHY link on which the first slot is located is faulty, the second network device deletes, from the first FlexE group, the PHY link on which the first slot is located, to obtain the second FlexE group. The second FlexE group does not include the PHY link on which the first slot is located. In S310, the second network device determines the second slot in the second FlexE group based on the slot allocation policy and the required bandwidth of the first service flow. In this manner, the RX end (the second network device) and the TX end (the first network device) synchronously perform a PHY link deletion procedure, so that consistency of the redetermined slots is ensured, and a case in which the entire FlexE group to which the PHY link belongs is unavailable after the PHY link is faulty is avoided.

In addition, after determining the second slot, the second network device may forcibly refresh a current client calendar based on the second slot, and update a slot corresponding to the first service flow in the client calendar from the first slot to the second slot. The client calendar is used to store a mapping relationship between a service flow and a slot. In this embodiment, the second network device is the RX end of the service flow, and the client calendar of the second network device is also referred to as an RX current table.

S311: The first network device and the second network device transmit the first service flow based on the second slot.

S311 includes the following S311A and S311B.

S311A: The first network device sends the first service flow to the second network device based on the first slot.

S311B: The second network device receives the first service flow from the first network device based on the first slot.

The first service flow is transmitted based on the redetermined slot, so that the service flow can be switched from the faulty PHY link to another PHY link in the FlexE group. Therefore, mutual protection between different PHY links in the FlexE group is implemented.

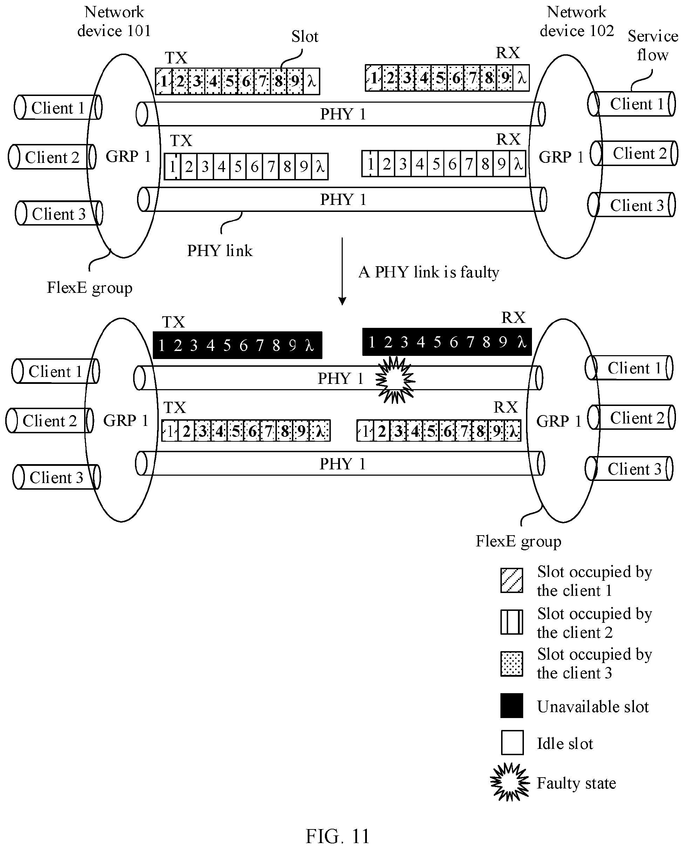

In the PHY link fault scenario, the slot allocation policy can be used to implement 1:1 service switching. For example, with reference to FIG. 11, PHY links are deployed in a 1:1 redundancy mode, a configured bandwidth of a FlexE group is 100G, and priorities configured for all clients are the same. A required bandwidth of a client 1 is 5G, a required bandwidth of a client 2 is 5G, and a required bandwidth of a client 3 is 40G. When a PHY 1 and a PHY 2 are in a normal state, according to the slot allocation policy provided in this embodiment, a slot 1 of the PHY 1 is allocated to the client 1, a slot 1 of the PHY 2 is allocated to the client 2, and a slot 2 to a slot 9 of the PHY 1 are allocated to the client 3. When the PHY 1 is in a faulty state, each slot of the PHY 1 is unavailable. According to the slot allocation policy provided in this embodiment, the slot 1 of the PHY 2 is reallocated to the client 1, a slot 2 of the PHY 2 is reallocated to the client 2, and a slot 3 to a slot λ of the PHY 2 are reallocated to the client 3, so that the client 1 is migrated from the slot 1 of the PHY 1 to the slot 1 of the PHY 2, the client 2 is migrated from the slot 1 of the PHY 2 to the slot 2 of the PHY 2, and the client 3 is migrated from the slot 2 to the slot 9 of the PHY 1 to the slot 3 to the slot λ of the PHY 2. Therefore, service flows on the faulty PHY 1 are switched to the PHY 2, to implement 1:1 service switching, and implement 1:1 protection between different PHYs in the FlexE group.

In addition, in the PHY link fault scenario, the slot allocation policy can be used to implement N: 1 protection between different PHY links in the FlexE group. For example, the FlexE group includes N active PHY links and one standby PHY link, and a priority of each service flow is configured. When the N active PHY links are in the normal state, a low-priority service flow is transmitted on the standby PHY link, and a high-priority service flow is transmitted on the active PHY link. When one of the N active PHY links is faulty, the RX end and the TX end determine a slot on the standby PHY link based on a priority of a service flow by implementing the slot allocation policy, and switch the service flow from the faulty active PHY link to the standby PHY link, to preempt the slot originally occupied by the low-priority service flow, and implement N: 1 protection on the PHY link.

This embodiment provides a method for efficiently allocating a slot in FlexE. The network device automatically allocates the slot on the PHY link to the service flow based on the slot allocation policy and the required bandwidth of the service flow, and transmits the service flow by using the allocated slot. Because the user does not need to manually specify a corresponding slot for the service flow, learning costs caused by perception of the user for how to arrange slots are avoided, and a complex operation of configuring the slot for the service flow by the user is avoided. Therefore, configuration complexity is greatly reduced, and slot allocation efficiency is improved.

The following describes the method 300 by using the method 400 as an example. In the method 400, a slot allocation action is performed by the resource management layer 202 in the system architecture 200. A slot allocation policy used when a PHY link is normal is referred to as a bandwidth allocation policy, and a slot allocation policy used when the PHY link is faulty is referred to as a dynamic migration policy.

In other words, a method procedure described in the method 400 is about how the resource management layer allocates a slot based on the bandwidth allocation policy when the PHY link is normal, and how the resource management layer reallocates a slot based on the dynamic migration policy when the PHY link is faulty. It should be understood that, for similar steps in the method 400 and the method 300, refer to the method 300. Details are not described in the method 400.

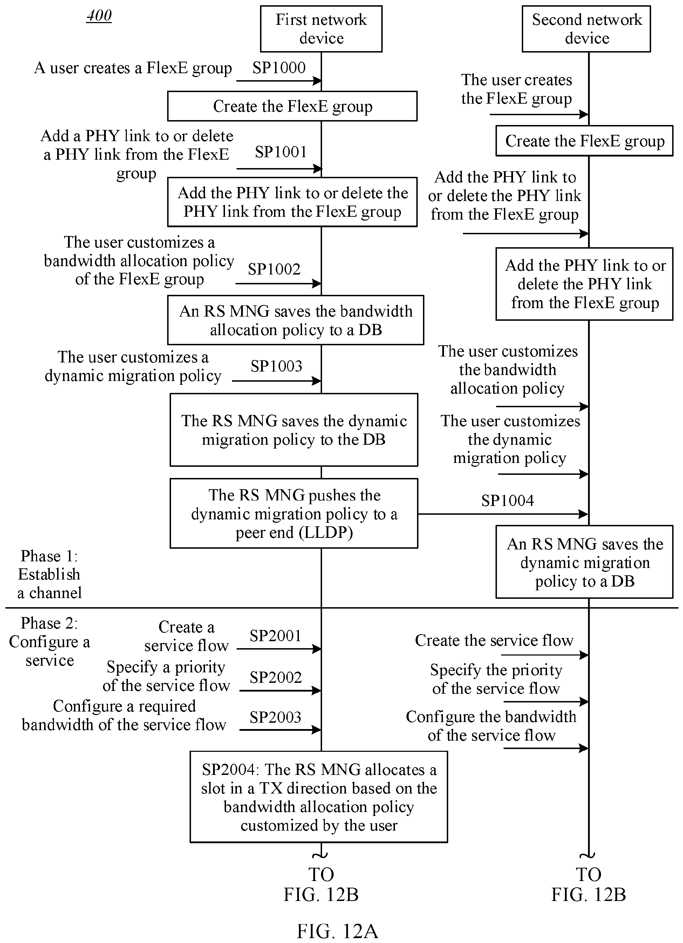

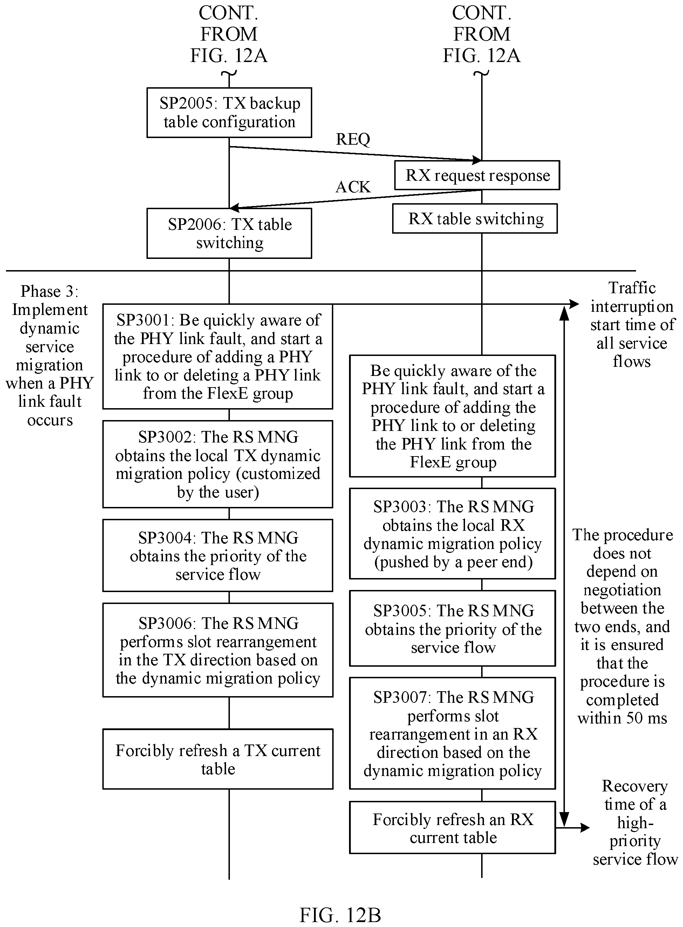

FIG. 12A and FIG. 12B are a flowchart of the FlexE-based service flow transmission method 400 according to an embodiment of this application. For example, in the method 400, the resource management layer 202 is represented by an RS MNG. The method 400 includes three phases. A phase 1 is to establish a channel, a phase 2 is to configure a service, and a phase 3 is to implement dynamic service migration when a PHY fault occurs. The phase 1 includes SP1000 to SP1004. The phase 2 includes SP2001 to SP2006. The phase 3 includes SP3001 to SP3007.

SP1000: A user separately performs a FlexE group creation operation on a first network device and a second network device. In response to the creation operation, the first network device creates a FlexE group. In response to the creation operation, the second network device creates the FlexE group.

SP1001: The first network device and the second network device add a PHY link to or delete a PHY link from the FlexE group.

SP1002: The user customizes a bandwidth allocation policy of the FlexE group, and a resource management layer of the first network device saves the bandwidth allocation policy customized by the user to a database (database, DB).

SP1003: The user customizes a dynamic migration policy, and the resource management layer of the first network device saves the dynamic migration policy customized by the user to the DB.

SP1004: The resource management layer of the first network device pushes the dynamic migration policy to a peer end based on the LLDP. A resource management layer of the second network device receives the pushed dynamic migration policy, and saves the dynamic migration policy to a DB.

SP2001: The user separately performs a service flow creation operation on the first network device and the second network device. In response to the creation operation, the first network device creates a service flow. In response to the creation operation, the second network device creates the service flow.

SP2002: The user separately specifies a priority of the service flow on the first network device and the second network device.

SP2003: The user separately configures a required bandwidth of the service flow on the first network device and the second network device.

SP2004: The resource management layer of the first network device allocates a slot in a TX direction based on the bandwidth allocation policy customized by the user.

SP2005: The first network device performs an action of TX backup table configuration, and sends a request (Request, REQ) to the second network device. The second network device, as an RX end, responds to the request, and returns an acknowledge (Acknowledge, ACK) message to the first network device.

SP2006: The first network device performs an action of TX table switching, and the second network device performs an action of RX table switching.

SP3001: The first network device is quickly aware of the PHY link fault, and starts a procedure of adding a PHY link to or deleting a PHY link from the FlexE group. The second network device is quickly aware of the PHY link fault, and starts a procedure of adding the PHY link to or deleting the PHY link from the FlexE group.

SP3002: The resource management layer of the first network device obtains the local TX dynamic migration policy customized by the user.

SP3003: The resource management layer of the second network device obtains the RX dynamic migration policy pushed by a peer end to the local end.

SP3004: The resource management layer of the first network device obtains the priority of the service flow.

SP3005: The resource management layer of the second network device obtains the priority of the service flow.

SP3006: The resource management layer of the first network device performs slot rearrangement in the TX direction based on the dynamic migration policy.

SP3007: The resource management layer of the second network device performs slot rearrangement in an RX direction based on the dynamic migration policy.

It can be learned from FIG. 12A and FIG. 12B that a procedure in the phase 3 does not depend on negotiation between the two ends. Therefore, it is ensured that the procedure is completed within 50 milliseconds.

Optionally, a technical means of redetermining the slot based on the slot allocation policy and the required bandwidth is applied to a scenario other than the scenario in which the PHY link is faulty. The following describes some extended application scenarios by using examples.

Optionally, the technical means is applied to a scenario in which the required bandwidth of the service flow is updated.

Specifically, when the required bandwidth of the first service flow is updated, the first network device determines a third slot based on the slot allocation policy and an updated required bandwidth of the first service flow, where the third slot is different from the first slot. The first network device sends the first service flow to the second network device based on the third slot. Correspondingly, when the required bandwidth of the first service flow is updated, the second network device determines the third slot based on the slot allocation policy and the updated required bandwidth of the first service flow. The second network device receives the first service flow from the first network device based on the third slot. For how to determine the third slot in this scenario, refer to the method 300 or the method 400. For example, the third slot is determined in any one or more of the optional manner 1 to the optional manner 6.

For example, during network establishment, the user configures the required bandwidth of the service flow to 5G, and the first network device transmits the service flow by using a slot of 5G. As a service volume increases, the bandwidth of 5G is insufficient. The user reconfigures the required bandwidth of the service flow to 10G. In response to an increase of the required bandwidth, the first network device and the second network device redetermine a slot of 10G based on the slot allocation policy and the required bandwidth of 10G. The first network device and the second network device transmit the service flow by using the slot of 10G.

In the scenario in which the required bandwidth of the service flow is updated, the slot is reallocated by using the slot allocation policy. Because the receive end and the transmit end use the consistent slot allocation policy and the consistent updated required bandwidth, the receive end and the transmit end can automatically reallocate the consistent slot. Therefore, communication overheads caused by negotiation for slot configuration are avoided, and lossless update of the required bandwidth is implemented.

Optionally, the technical means is applied to a scenario in which a PHY link is added to or deleted from the FlexE group. For example, when a bandwidth provided by the PHY in the FlexE group is insufficient, one or more PHYs need to be added to the current FlexE group to support more service flows. In this scenario, when the PHY link is added to the FlexE group in which the first slot is located, the first network device determines, based on the slot allocation policy and the required bandwidth of the first service flow, a fourth slot in slots of a FlexE group obtained after the PHY link is added, where the fourth slot is different from the first slot. The first network device sends the first service flow to the second network device based on the fourth slot. Correspondingly, when the PHY link is added to the FlexE group in which the first slot is located, the second network device determines, based on the slot allocation policy and the required bandwidth of the first service flow, the fourth slot in the slots of the FlexE group obtained after the PHY link is added, where the fourth slot is different from the first slot. The second network device receives the first service flow from the first network device based on the fourth slot.

For another example, if a large amount of bandwidth is idle in the current FlexE group, one or more PHY links may be removed, to release a network resource for another service. In this scenario, when the PHY link is deleted from the FlexE group in which the first slot is located, the first network device determines, based on the slot allocation policy and the required bandwidth of the first service flow, a fifth slot in a slot of a FlexE group obtained after the PHY link is deleted, where the fifth slot is different from the first slot. The first network device sends the first service flow to the second network device based on the fifth slot. Correspondingly, when the PHY link is deleted from the FlexE group in which the first slot is located, the second network device determines, based on the slot allocation policy and the required bandwidth of the first service flow, the fifth slot in the slot of the FlexE group obtained after the PHY link is deleted, where the fifth slot is different from the first slot. The second network device receives the first service flow from the first network device based on the fifth slot.

When the PHY link is added to or deleted from the FlexE group, the slot is reallocated by using the slot allocation policy. Because the receive end and the transmit end use the consistent slot allocation policy and the consistent FlexE group obtained after the PHY link is added or deleted, the receive end and the transmit end can automatically reallocate the consistent slot. Therefore, communication overheads caused by negotiation for slot configuration are avoided, and lossless addition or deletion of the PHY link is implemented.

For example, the technical means is applied to a scenario in which a service flow is added or deleted. Specifically, when a to-be-transmitted third service flow is added or an originally transmitted fourth service flow is deleted, the first network device determines a sixth slot based on the slot allocation policy and the required bandwidth of the first service flow, where the sixth slot is different from the first slot. The first network device sends the first service flow to the second network device based on the sixth slot. Correspondingly, when the to-be-transmitted third service flow is added or the originally transmitted fourth service flow is deleted, the second network device determines the sixth slot based on the slot allocation policy and the required bandwidth of the first service flow, where the sixth slot is different from the first slot. The second network device receives the first service flow from the first network device based on the sixth slot.

For example, initially, idle slots are sufficient, and the first network device allocates, to a service flow 1 (the first service flow), a slot that meets a required bandwidth of the service flow 1. Then, a new service flow 2 (the third service flow) needs to be transmitted, and a priority of the service flow 2 is higher than a priority of the service flow 1. However, current idle slots are insufficient. In this scenario, the transmit end and the receive end may reallocate, to the service flow 1 based on the slot allocation policy, a slot that meets an active bandwidth. Because the required bandwidth is greater than the active bandwidth, an idle slot of a specific bandwidth can be spared, and the spared idle slot may be allocated to the service flow 2, to preferentially meet a bandwidth requirement of the service flow 2.

For example, initially, because idle slots are insufficient, a required bandwidth of a service flow A (the first service flow) cannot be met. In this case, the transmit end and the receive end allocate a slot that meets an active bandwidth to the service flow A. Then, a service flow B (the fourth service flow) originally transmitted by the transmit end and the receive end is deleted due to service suspension or another reason, and a slot occupied by the service flow B is released. In this case, a quantity of idle slots of the FlexE group increases, and a current bandwidth resource of the FlexE group changes from being insufficient to being sufficient to meet the required bandwidth of the service flow A. In this scenario, the transmit end and the receive end may reallocate, to the service flow A based on the slot allocation policy, a slot that meets the required bandwidth, to meet a bandwidth requirement of the service flow A by using the newly released slot.

In addition, in the scenario in which the service flow is added or deleted, the slot is reallocated by using the slot allocation policy. Because the receive end and the transmit end use the consistent slot allocation policy, the receive end and the transmit end can automatically reallocate the consistent slot. Therefore, communication overheads caused by negotiation for slot configuration are avoided, and lossless addition or deletion of the service flow is implemented.

The foregoing describes the method 300 and the method 400 in embodiments of this application. The following describes a network device in embodiments of this application. It should be understood that the network device described below has any function of the first network device or the second network device in the foregoing method 300 or method 400.

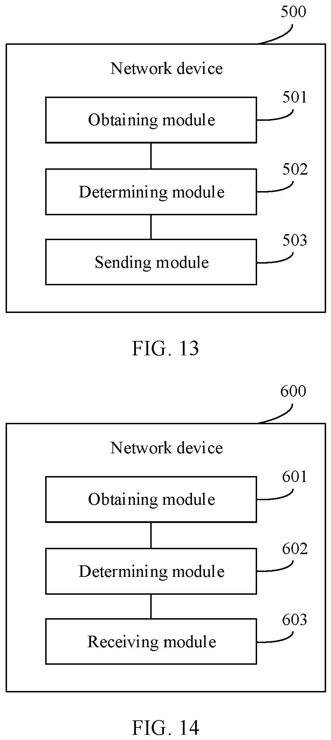

FIG. 13 is a schematic diagram of a structure of a network device 500 according to an embodiment of this application. As shown in FIG. 13, the network device 500 includes: an obtaining module 501, configured to perform S304, SP1002, or SP1003; a determining module 502, configured to perform S306 or SP2004; and a sending module 503, configured to perform S308A.

Optionally, the determining module 502 is further configured to perform S309, and the sending module 503 is further configured to perform S311A.

It should be understood that the network device 500 corresponds to the first network device in the foregoing method embodiments, and the modules and the foregoing other operations and/or functions in the network device 500 are separately used to implement various steps and methods implemented by the first network device in the method embodiments. For specific details, refer to the method 300 or the method 400. For brevity, details are not described herein again.

It should be understood that, when the network device 500 transmits a service flow based on FlexE, division into the foregoing functional modules is merely used as an example for description. During actual application, the foregoing functions may be allocated to and implemented by different functional modules according to a requirement. In other words, an inner structure of the network device 500 is divided into different functional modules, to complete all or some of the foregoing described functions. In addition, the network device 500 provided in the foregoing embodiment and the method 300 are based on a same concept. For a specific implementation process of the network device 500, refer to the method 300. Details are not described herein again.

It should be understood that the obtaining module 501 in the network device 500 is equivalent to the user configuration layer 201 in the system architecture 200, the determining module 502 in the network device 500 is equivalent to the resource management layer 202 in the system architecture 200, and the sending module 503 in the network device 500 is equivalent to the FlexE physical interface 204 in the system architecture 200.

FIG. 14 is a schematic diagram of a structure of a network device 600 according to an embodiment of this application. As shown in FIG. 14, the network device 600 includes: an obtaining module 601, configured to perform S305 or SP1004; a determining module 602, configured to perform S307; and a receiving module 603, configured to perform S308B.

Optionally, the determining module 602 is further configured to perform S310, and the receiving module 603 is further configured to perform S311B.

It should be understood that the network device 600 corresponds to the second network device in the foregoing method embodiments, and the modules and the foregoing other operations and/or functions in the network device 600 are separately used to implement various steps and methods implemented by the second network device in the method embodiments. For specific details, refer to the method 300 or the method 400. For brevity, details are not described herein again.

It should be understood that, when the network device 600 transmits a service flow based on FlexE, division into the foregoing functional modules is merely used as an example for description. During actual application, the foregoing functions may be allocated to and implemented by different functional modules according to a requirement. In other words, an inner structure of the network device 600 is divided into different functional modules, to complete all or some of the foregoing described functions. In addition, the network device 600 provided in the foregoing embodiment and the method 300 are based on a same concept. For a specific implementation process of the network device 600, refer to the method 300. Details are not described herein again.

It should be understood that the obtaining module 601 in the network device 600 is equivalent to the user configuration layer 201 in the system architecture 200, the determining module 602 in the network device 600 is equivalent to the resource management layer 202 in the system architecture 200, and the receiving module 603 in the network device 600 is equivalent to the FlexE physical interface 204 in the system architecture 200.

In correspondence to the method embodiments and the virtual apparatus embodiments provided in this application, an embodiment of this application further provides a network device. The following describes a hardware structure of the network device.

A network device 700 or a network device 800 corresponds to the first network device or the second network device in the foregoing method embodiments, and hardware, modules, and the foregoing other operations and/or functions in the network device 700 or the network device 800 are separately used to implement various steps and methods implemented by the first network device or the second network device in the method embodiments. For specific details of a detailed procedure of allocating a slot by the network device 700 or the network device 800, refer to the foregoing method embodiments. For brevity, details are not described herein again. The steps of the foregoing method 300 or method 400 are completed by using an integrated logic circuit of hardware in a processor of the network device 700 or the network device 800 or by using instructions in a form of software. The steps in the methods disclosed with reference to embodiments of this application may be directly performed and completed by a hardware processor, or may be performed and completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware of the processor. To avoid repetition, details are not described herein again.

The network device 700 or the network device 800 corresponds to the network device 500 or the network device 600 in the foregoing virtual apparatus embodiments. Each functional module in the network device 500 or the network device 600 is implemented by using software of the network device 700 or the network device 800. In other words, the functional module included in the network device 500 or the network device 600 is generated after the processor of the network device 700 or the network device 800 reads program code stored in the memory.

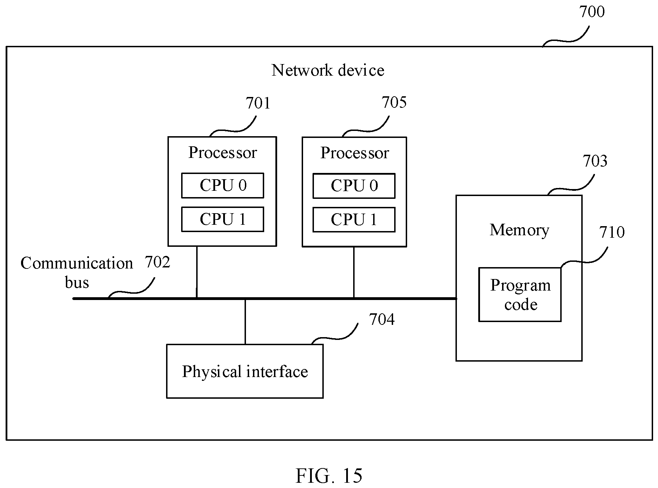

FIG. 15 is a schematic diagram of a structure of the network device 700 according to an embodiment of this application. The network device 700 may be configured as a first network device or a second network device.

The network device 700 includes at least one processor 701, a communication bus 702, a memory 703, and at least one physical interface 704.

The processor 701 may be a general-purpose CPU, an NP, a microprocessor, or one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL), or any combination thereof.

The communication bus 702 is configured to transfer information between the foregoing components. The communication bus 702 may be classified into an address bus, a data bus, a control bus, and the like. For ease of representation, only one thick line is used to represent the bus in the figure, but this does not mean that there is only one bus or only one type of bus.

The memory 703 may be a read-only memory (read-only memory, ROM) or another type of static storage device that can store static information and instructions, may be a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Blu-ray disc, and the like), a magnetic disk storage medium or another magnetic storage device, or any other medium that can be used to carry or store expected program code in an instruction form or a data structure form and that can be accessed by a computer. However, the memory 703 is not limited thereto. The memory 703 may exist independently, and is connected to the processor 701 through the communication bus 702. Alternatively, the memory 703 may be integrated with the processor 701.

The physical interface 704 is configured to communicate with another device or a communication network by using any apparatus such as a transceiver. The physical interface 704 includes a wired communication interface, and may further include a wireless communication interface. The wired communication interface may be, for example, an Ethernet interface. The Ethernet interface may be an optical interface, an electrical interface, or a combination thereof. The wireless communication interface may be a wireless local area network (wireless local area network, WLAN) interface, a cellular network communication interface, a combination thereof, or the like. The physical interface 704 is also referred to as a physical port, and the physical interface 704 corresponds to the FlexE physical interface 204 in the system architecture 200.

During specific implementation, in an embodiment, the processor 701 may include one or more CPUs, for example, a CPU 0 and a CPU 1 shown in FIG. 15.

During specific implementation, in an embodiment, the network device 700 may include a plurality of processors, for example, the processor 701 and a processor 705 shown in FIG. 15. Each of the processors may be a single-core processor (single-CPU) or may be a multicore processor (multi-CPU). The processor herein may refer to one or more devices, circuits, and/or processing cores configured to process data (for example, computer program instructions).

During specific implementation, in an embodiment, the network device 700 may further include an output device 706 and an input device 707. The output device 706 communicates with the processor 701, and may display information in a plurality of manners. For example, the output device 706 may be a liquid crystal display (liquid crystal display, LCD), a light emitting diode (light emitting diode, LED) display device, a cathode ray tube (cathode ray tube, CRT) display device, or a projector (projector). The input device 707 communicates with the processor 701, and may receive an input of a user in a plurality of manners. For example, the input device 707 may be a mouse, a keyboard, a touchscreen device, a sensing device, or the like.

In some embodiments, the memory 703 is configured to store program code 710 for performing the solutions of this application, and the processor 701 may execute the program code 710 stored in the memory 703. In other words, the network device 700 may implement, by using the processor 701 and the program code 710 in the memory 703, the method 300 or the method 400 provided in the method embodiments.

The network device 700 in this embodiment of this application may correspond to the first network device or the second network device in the foregoing method embodiments. In addition, the processor 701, the physical interface 704, and the like in the network device 700 may implement functions and/or various steps and methods implemented by the first network device or the second network device in the foregoing method embodiments. For brevity, details are not described herein again.

It should be understood that the sending module 503 in the network device 500 is equivalent to the physical interface 704 in the network device 700, and the obtaining module 501 and the determining module 502 in the network device 500 may be equivalent to the processor 701 in the network device 700.

It should be understood that the receiving module 603 in the network device 600 is equivalent to the physical interface 704 in the network device 700, and the obtaining module 601 and the determining module 602 in the network device 600 may be equivalent to the processor 701 in the network device 700.

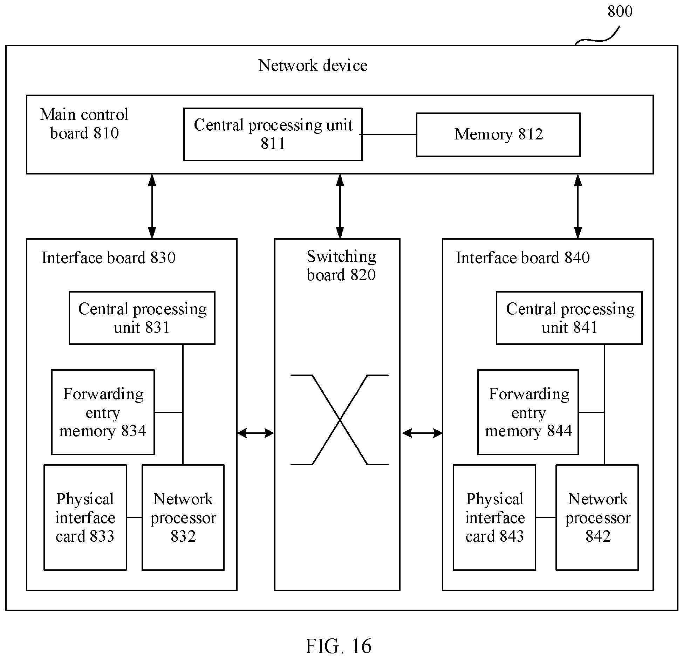

FIG. 16 is a schematic diagram of a structure of the network device 800 according to an embodiment of this application. The network device 800 may be configured as a first network device or a second network device.

The network device 800 includes a main control board 810 and an interface board 830.

The main control board 810 is also referred to as a main processing unit (main processing unit, MPU) or a route processing card (route processor card). The main control board 810 controls and manages components in the network device 800, including route calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to: provide various service interfaces, and forward a data packet. The service interfaces include but are not limited to an Ethernet interface, a POS (Packet over SONET/SDH) interface, and the like. The Ethernet interface is, for example, a flexible Ethernet service interface (Flexible Ethernet Client, FlexE Client). The interface board 830 includes a central processing unit 831, a network processor 832, a forwarding entry memory 834, and a physical interface card (physical interface card, PIC) 833.

The central processing unit 831 on the interface board 830 is configured to: control and manage the interface board 830, and communicate with the central processing unit 811 on the main control board 810.

The network processor 832 is configured to forward a packet. A form of the network processor 832 may be a forwarding chip. Specifically, processing on an uplink packet includes processing at a packet ingress interface and forwarding table searching, and processing on a downlink packet includes forwarding table searching and the like.

The physical interface card 833 is configured to implement a physical layer interconnection function. Original traffic enters the interface board 830 from the physical interface card 833, and a processed packet is sent out from the physical interface card 833. The physical interface card 833 includes at least one physical interface. The physical interface is also referred to as a physical port. The physical interface card 833 corresponds to the FlexE physical interface 204 in the system architecture 200. The physical interface card 833, also referred to as a subcard, may be mounted on the interface board 830, and is responsible for converting an optical/electrical signal into a packet, performing validity check on the packet, and forwarding the packet to the network processor 832 for processing. In some embodiments, the central processing unit 831 on the interface board 803 may also perform a function of the network processor 832, for example, implementing software forwarding based on a general-purpose CPU, so that the network processor 832 is not required in the physical interface card 833.

Optionally, the network device 800 includes a plurality of interface boards. For example, the network device 800 further includes an interface board 840, and the interface board 840 includes a central processing unit 841, a network processor 842, a forwarding entry memory 844, and a physical interface card 843.

Optionally, the network device 800 further includes a switching board 820. The switching board 820 may also be referred to as a switch fabric unit (switch fabric unit, SFU). When the network device has a plurality of interface boards 830, the switching board 820 is configured to complete data exchange between the interface boards. For example, the interface board 830 and the interface board 840 may communicate with each other via the switching board 820.

The main control board 810 is coupled to the interface board 830. For example, the main control board 810, the interface board 830, the interface board 840, and the switching board 820 are connected to a system backplane by using a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the network device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 832 forwards a packet received by the physical interface card 833. The forwarding table delivered by the control plane may be stored in the forwarding entry memory 834. In some embodiments, the control plane and the forwarding plane may be totally separated, and are not on a same device.

If the network device 800 is configured as the first network device, the central processing unit 811 obtains a slot allocation policy; and determines a first slot based on the slot allocation policy and a required bandwidth. The network processor 832 triggers the physical interface card 833 to send a first service flow to a second network device based on the first slot.

If the network device 800 is configured as the second network device, the central processing unit 811 obtains a slot allocation policy; and determines a first slot based on the slot allocation policy and a required bandwidth. The network processor 832 triggers the physical interface card 833 to receive a first service flow from a first network device based on the first slot.

It should be understood that the sending module 503 in the network device 500 is equivalent to the physical interface card 833 or the physical interface card 843 in the network device 800, and the obtaining module 501 and the determining module 502 in the network device 500 may be equivalent to the central processing unit 811 or the central processing unit 831 in the network device 800.

It should be understood that the receiving module 603 in the network device 600 is equivalent to the physical interface card 833 or the physical interface card 843 in the network device 800, and the obtaining module 601 and the determining module 602 in the network device 600 may be equivalent to the central processing unit 811 or the central processing unit 831 in the network device 800.

It should be understood that an operation on the interface board 840 is consistent with an operation on the interface board 830 in this embodiment of this application. For brevity, details are not described again. It should be understood that the network device 800 in this embodiment may correspond to the first network device or the second network device in the foregoing method embodiments. The main control board 810, and the interface board 830 and/or the interface board 840 in the network device 800 may implement functions and/or various steps implemented by the first network device or the second network device in the foregoing method embodiments. For brevity, details are not described herein again.

It should be noted that, there may be one or more main control boards, and when there are a plurality of main control boards, the main control boards may include an active main control board and a standby main control board. There may be one or more interface boards, and a network device having a stronger data processing capability provides more interface boards. There may also be one or more physical interface cards on the interface board. There may be no switching board or one or more switching boards. When there are a plurality of switching boards, load sharing and redundancy backup may be implemented together. In a centralized forwarding architecture, the network device may need no switching board, and the interface board provides a function of processing service data in an entire system. In a distributed forwarding architecture, the network device may have at least one switching board, and data exchange between a plurality of interface boards is implemented by using the switching board, to provide a large-capacity data exchange and processing capability. Therefore, a data access and processing capability of the network device in the distributed architecture is better than that of the device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined to form one central processing unit on the card, to perform functions obtained by combining the two central processing units. This form of device (for example, a network device such as a low-end switch or a router) has a weak data exchange and processing capability. A specific architecture that is to be used depends on a specific networking deployment scenario. This is not limited herein.

In some possible embodiments, the first network device or the second network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as the first network device or the second network device. For example, the first network device or the second network device may be implemented based on a general-purpose physical server in combination with a network functions virtualization (Network Functions Virtualization, NFV) technology. The first network device or the second network device is a virtual host, a virtual router, or a virtual switch. After reading this application, with reference to the NFV technology, a person skilled in the art may virtualize, on the general-purpose physical server, the first network device or the second network device having the foregoing functions. Details are not described herein.

It should be understood that the network devices in the foregoing product forms separately have any function of the first network device or the second network device in the foregoing method embodiments, and details are not described herein.

An embodiment of this application provides a computer program product. When the computer program product runs on a network device, the network device is enabled to perform the method performed by the first network device in the method 300 or the method 400.

An embodiment of this application provides a computer program product. When the computer program product runs on a network device, the network device is enabled to perform the method performed by the second network device in the method 300 or the method 400.

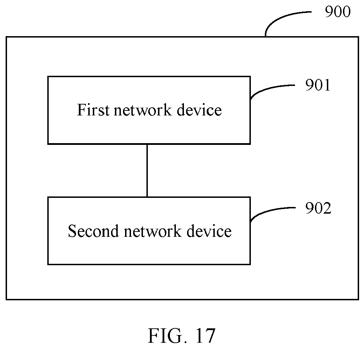

Refer to FIG. 17. An embodiment of this application provides a network system 900. The system 900 includes a first network device 901 and a second network device 902. Optionally, the first network device 901 is the network device 500, the network device 700, or the network device 800, and the second network device 902 is the network device 600, the network device 700, or the network device 800.

A person of ordinary skill in the art may be aware that, the method steps and units described in embodiments disclosed in this specification may be implemented by electronic hardware, computer software, or a combination thereof. To clearly describe the interchangeability between the hardware and the software, the foregoing has generally described steps and compositions of each embodiment according to functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment, and details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected according to actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for indicating a computer device (which may be a personal computer, a server, a network device, or the like) to perform all or some of the steps of the method described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

All or some of the foregoing embodiments may be implemented by using software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer program instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive), or the like.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, or an optical disc.

The foregoing descriptions are merely optional embodiments of this application, but are not intended to limit this application. Any modification, equivalent replacement, or improvement made without departing from the spirit and principle of this application shall fall within the protection scope of this application.

## Claims

1. A flexible Ethernet FlexE-based service flow transmission method, wherein the method comprises:
obtaining, by a first network device, a slot allocation policy, wherein the slot allocation policy is for allocating a slot based on a required bandwidth of a first service flow;
determining, by the first network device, a first slot based on the slot allocation policy and the required bandwidth, wherein the first slot is a slot of a physical layer PHY link between the first network device and a second network device; and
sending, by the first network device, the first service flow to the second network device based on the first slot.

2. The method according to claim 1, wherein the determining, by the first network device, a first slot based on the slot allocation policy and the required bandwidth comprises:
if an idle slot meets the required bandwidth, determining, by the first network device in the idle slot based on the slot allocation policy and the required bandwidth, the first slot that meets the required bandwidth.

3. The method according to claim 1, wherein the determining, by the first network device, a first slot based on the slot allocation policy and the required bandwidth comprises:
if an idle slot does not meet the required bandwidth, determining, by the first network device in the idle slot based on the slot allocation policy and an active bandwidth, the first slot that meets the active bandwidth, wherein the active bandwidth is less than the required bandwidth, and the active bandwidth is a minimum required bandwidth on which the first network device can start transmission of the first service flow.

4. The method according to claim 1, wherein the determining, by the first network device, a first slot based on the slot allocation policy and the required bandwidth comprises:
if an idle slot does not meet the required bandwidth, determining, by the first network device based on the slot allocation policy and a priority of the first service flow, the first slot in a slot occupied by a second service flow, wherein a priority of the second service flow is lower than the priority of the first service flow.

5. The method according to claim 1, wherein the determining, by the first network device, a first slot based on the slot allocation policy and the required bandwidth comprises:
determining, by the first network device based on the slot allocation policy, a first PHY link with a smallest physical interface number in an available PHY link of a FlexE group; and
determining, by the first network device based on the required bandwidth, the first slot with a smallest slot number in an idle slot of the first PHY link.

6. The method according to claim 1, wherein the determining, by the first network device, a first slot based on the slot allocation policy and the required bandwidth comprises:
determining, by the first network device based on the slot allocation policy, a second PHY link with smallest load in an available PHY link of a FlexE group; and
determining, by the first network device based on the required bandwidth, the first slot with a smallest slot number in an idle slot of the second PHY link.

7. The method according to claim 1, wherein the determining, by the first network device, a first slot based on the slot allocation policy and the required bandwidth comprises:
determining, by the first network device, the first slot in idle slots of a plurality of PHY links based on the slot allocation policy and the required bandwidth, wherein the first slot is evenly distributed on different PHY links in the plurality of PHY links.

8. The method according to any one of claims 1 to 7, wherein after the determining, by the first network device, a first slot based on the slot allocation policy and the required bandwidth, the method further comprises:
when the PHY link on which the first slot is located is faulty, determining, by the first network device, a second slot based on the slot allocation policy and the required bandwidth of the first service flow, wherein the second slot is different from the first slot; and
sending, by the first network device, the first service flow to the second network device based on the second slot.

9. A flexible Ethernet FlexE-based service flow transmission method, wherein the method comprises:
obtaining, by a second network device, a slot allocation policy, wherein the slot allocation policy is for allocating a slot based on a required bandwidth of a first service flow;
determining, by the second network device, a first slot based on the slot allocation policy and the required bandwidth, wherein the first slot is a slot of a physical layer PHY link between the second network device and a first network device; and
receiving, by the second network device, the first service flow from the first network device based on the first slot.

10. The method according to claim 9, wherein the determining, by the second network device, a first slot based on the slot allocation policy and the required bandwidth comprises:
if an idle slot meets the required bandwidth, determining, by the second network device in the idle slot based on the slot allocation policy and the required bandwidth, the first slot that meets the required bandwidth.

11. The method according to claim 9, wherein the determining, by the second network device, a first slot based on the slot allocation policy and the required bandwidth comprises:
if an idle slot does not meet the required bandwidth, determining, by the second network device in the idle slot based on the slot allocation policy and an active bandwidth, the first slot that meets the active bandwidth, wherein the active bandwidth is less than the required bandwidth, and the active bandwidth is a minimum required bandwidth on which the second network device can start transmission of the first service flow.

12. The method according to claim 9, wherein the determining, by the second network device, a first slot based on the slot allocation policy and the required bandwidth comprises:
if an idle slot does not meet the required bandwidth, determining, by the second network device based on the slot allocation policy and a priority of the first service flow, the first slot in a slot occupied by a second service flow, wherein a priority of the second service flow is lower than the priority of the first service flow.

13. The method according to claim 9, wherein the determining, by the second network device, a first slot based on the slot allocation policy and the required bandwidth comprises:
determining, by the second network device based on the slot allocation policy, a first PHY link with a smallest physical interface number in an available PHY link of a FlexE group; and
determining, by the second network device based on the required bandwidth, the first slot with a smallest slot number in an idle slot of the first PHY link.

14. The method according to claim 9, wherein the determining, by the second network device, a first slot based on the slot allocation policy and the required bandwidth comprises:
determining, by the second network device based on the slot allocation policy, a second PHY link with smallest load in an available PHY link of a FlexE group; and
determining, by the second network device based on the required bandwidth, the first slot with a smallest slot number in an idle slot of the second PHY link.

15. The method according to claim 9, wherein the determining, by the second network device, a first slot based on the slot allocation policy and the required bandwidth comprises:
determining, by the second network device, the first slot in idle slots of a plurality of PHY links based on the slot allocation policy and the required bandwidth, wherein the first slot is evenly distributed on different PHY links in the plurality of PHY links.

16. The method according to any one of claims 9 to 15, wherein after the determining, by the second network device, a first slot based on the slot allocation policy and the required bandwidth, the method further comprises:
when the PHY link on which the first slot is located is faulty, determining, by the second network device, a second slot based on the slot allocation policy and the required bandwidth of the first service flow, wherein the second slot is different from the first slot; and
receiving, by the second network device, the first service flow from the first network device based on the second slot.

17. A network device, wherein the network device comprises:
an obtaining module, configured to obtain a slot allocation policy, wherein the slot allocation policy is for allocating a slot based on a required bandwidth of a first service flow;
a determining module, configured to determine a first slot based on the slot allocation policy and the required bandwidth, wherein the first slot is a slot of a physical layer PHY link; and
a sending module, configured to send the first service flow based on the first slot.

18. The network device according to claim 17, wherein the determining module is configured to: if an idle slot meets the required bandwidth, determine, in the idle slot based on the slot allocation policy and the required bandwidth, the first slot that meets the required bandwidth.

19. The network device according to claim 17, wherein the determining module is configured to: if an idle slot does not meet the required bandwidth, determine, in the idle slot based on the slot allocation policy and an active bandwidth, the first slot that meets the active bandwidth, wherein the active bandwidth is less than the required bandwidth, and the active bandwidth is a minimum required bandwidth on which transmission of the first service flow can be started.

20. The network device according to claim 17, wherein the determining module is configured to: if an idle slot does not meet the required bandwidth, determine, based on the slot allocation policy and a priority of the first service flow, the first slot in a slot occupied by a second service flow, wherein a priority of the second service flow is lower than the priority of the first service flow.

21. The network device according to claim 17, wherein the determining module is configured to: determine, based on the slot allocation policy, a first PHY link with a smallest physical interface number in an available PHY link of a FlexE group; and determine, based on the required bandwidth, the first slot with a smallest slot number in an idle slot of the first PHY link.

22. The network device according to claim 17, wherein the determining module is configured to: determine, based on the slot allocation policy, a second PHY link with smallest load in an available PHY link of a FlexE group; and determine, based on the required bandwidth, the first slot with a smallest slot number in an idle slot of the second PHY link.

23. The network device according to claim 17, wherein the determining module is configured to: determine the first slot in idle slots of a plurality of PHY links based on the slot allocation policy and the required bandwidth, wherein the first slot is evenly distributed on different PHY links in the plurality of PHY links.

24. The network device according to any one of claims 17 to 23, wherein
the determining module is further configured to: when the PHY link on which the first slot is located is faulty, determine a second slot based on the slot allocation policy and the required bandwidth of the first service flow, wherein the second slot is different from the first slot; and
the sending module is further configured to send the first service flow based on the second slot.

25. A network device, wherein the network device comprises:
an obtaining module, configured to obtain a slot allocation policy, wherein the slot allocation policy is for allocating a slot based on a required bandwidth of a first service flow;
a determining module, configured to determine a first slot based on the slot allocation policy and the required bandwidth, wherein the first slot is a slot of a physical layer PHY link; and
a receiving module, configured to receive the first service flow based on the first slot.

26. The network device according to claim 25, wherein the determining module is configured to: if an idle slot meets the required bandwidth, determine, in the idle slot based on the slot allocation policy and the required bandwidth, the first slot that meets the required bandwidth.

27. The network device according to claim 25, wherein the determining module is configured to: if an idle slot does not meet the required bandwidth, determine, in the idle slot based on the slot allocation policy and an active bandwidth, the first slot that meets the active bandwidth, wherein the active bandwidth is less than the required bandwidth, and the active bandwidth is a minimum required bandwidth on which transmission of the first service flow can be started.

28. The network device according to claim 25, wherein the determining module is configured to: if an idle slot does not meet the required bandwidth, determine, based on the slot allocation policy and a priority of the first service flow, the first slot in a slot occupied by a second service flow, wherein a priority of the second service flow is lower than the priority of the first service flow.

29. The network device according to claim 25, wherein the determining module is configured to: determine, based on the slot allocation policy, a first PHY link with a smallest physical interface number in an available PHY link of a FlexE group; and determine, based on the required bandwidth, the first slot with a smallest slot number in an idle slot of the first PHY link.

30. The network device according to claim 25, wherein the determining module is configured to: determine, based on the slot allocation policy, a second PHY link with smallest load in an available PHY link of a FlexE group; and determine, based on the required bandwidth, the first slot with a smallest slot number in an idle slot of the second PHY link.

31. The network device according to claim 25, wherein the determining module is configured to: determine the first slot in idle slots of a plurality of PHY links based on the slot allocation policy and the required bandwidth, wherein the first slot is evenly distributed on different PHY links in the plurality of PHY links.

32. The network device according to any one of claims 25 to 31, wherein
the determining module is further configured to: when the PHY link on which the first slot is located is faulty, determine a second slot based on the slot allocation policy and the required bandwidth of the first service flow, wherein the second slot is different from the first slot; and
the receiving module is further configured to receive the first service flow based on the second slot.
